(19) Europäisches Patentamt
European Patent Office
Office européen des brevets

(11) EP 0 997 517 B1

(12) **EUROPÄISCHE PATENTSCHRIFT**

(45) Veröffentlichungstag und Bekanntmachung des Hinweises auf die Patenterteilung:
**14.01.2004 Patentblatt 2004/03**

(51) Int Cl.⁷: **C10L 1/14**, C10L 10/04

(21) Anmeldenummer: **99119602.3**

(22) Anmeldetag: **02.10.1999**

(54) **Polymermischungen zur Verbesserung der Schmierwirkung von Mitteldestillaten**

Polymer mixtures to improve the lubricating activity of middle distillates

Mélanges polymères pour l'amélioration de l'action lubrifiante de distillats moyens

(84) Benannte Vertragsstaaten:
**BE DE FI FR GB IT NL SE**

(30) Priorität: **27.10.1998 DE 19849497**
**07.12.1998 DE 19856270**

(43) Veröffentlichungstag der Anmeldung:
**03.05.2000 Patentblatt 2000/18**

(73) Patentinhaber: **Clariant GmbH**
**65929 Frankfurt am Main (DE)**

(72) Erfinder:
- **Krull, Matthias, Dr.**
  **46147 Oberhausen (DE)**
- **Kupetz, Markus**
  **46529 Dinslaken (DE)**

(56) Entgegenhaltungen:
**EP-A- 0 926 168**
**EP-A- 0 960 908**
**WO-A-94/00536**
**WO-A-95/33805**
**WO-A-96/07682**
**WO-A-96/07719**
**WO-A-96/21709**
**US-A- 3 915 668**
**US-A- 4 155 719**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 997 517 B1

Printed by Jouve, 75001 PARIS (FR)

## Beschreibung

Die vorliegende Erfindung betrifft Additive, enthaltend hydroxylgruppenhaltige Copolymere und polare Stickstoffverbindungen, die Mitteldestillaten eine bessere Schmierwirkung verleihen, sowie die entsprechend additivierten Mitteldestillate.

Mineralöle und Mineralöldestillate, die als Brennstofföle verwendet werden, enthalten im allgemeinen 0,5 Gew.-% und mehr Schwefel, der bei der Verbrennung die Bildung von Schwefeldioxid verursacht. Um die daraus resultierenden Umweltbelastungen zu vermindern, wird der Schwefelgehalt von Brennstoffölen immer weiter abgesenkt. Die Dieseltreibstoffe betreffende Norm EN 590 schreibt in Deutschland zur Zeit einen maximalen Schwefelgehalt von 500 ppm vor. In Skandinavien kommen bereits Brennstofföle mit weniger als 200 ppm und in Ausnahmefällen mit weniger als 50 ppm Schwefel zur Anwendung. Diese Brennstofföle werden in der Regel dadurch hergestellt, daß man die aus dem Erdöl durch Destillation erhaltenen Fraktionen hydrierend raffiniert. Bei der Entschwefelung werden aber auch andere Substanzen entfernt, die den Brennstoffölen eine natürliche Schmierwirkung verleihen. Zu diesen Substanzen zählen unter anderem polyaromatische und polare Verbindungen.

Es hat sich nun aber gezeigt, daß die reibungs- und verschleißmindernden Eigenschaften von Brennstoffölen mit zunehmendem Entschwefelungsgrad schlechter werden. Oftmals sind diese Eigenschaften so mangelhaft, daß an den vom Kraftstoff geschmierten Materialien wie z.B. den Verteiler-Einspritzpumpen von Dieselmotoren schon nach kurzer Zeit mit Fraßerscheinungen gerechnet werden muß. Die mittlerweile in Skandinavien vorgenommene weitere Absenkung des 95 %-Destillationspunkts auf unter 370°C, teilweise auf unter 350°C oder unter 330°C verschärft diese Problematik weiter.

Im Stand der Technik sind daher Ansätze beschrieben, die eine Lösung dieses Problems darstellen sollen (sogenannte Lubricity-Additive).

EP-A-0 764 198 offenbart Additive, die die Schmierwirkung von Brennstoffölen verbessern, und die polare Stickstoffverbindungen auf Basis von Alkylaminen oder Alkylammoniumsalzen mit Alkylresten von 8 bis 40 Kohlenstoffatomen enthalten.

EP-A-0 743 972 offenbart die Verwendung von Mischungen aus Lubricity-Additiven (Ester mehrwertiger Alkohole und Carbonsäuren mit 2 bis 50 C-Atomen bzw. Dicarbonsäuren) und stickstoffhaltigen Verbindungen zur synergistischen Verbesserung der Schmierwirkung von hochentschwefelten Ölen. Als stickstoffhaltige Verbindungen werden Paraffininhibitoren enthaltend Amide bzw. Ammoniumsalze von Dicarbonsäuren mit Fettaminen eingesetzt.

WO 98/16597 offenbart die Verwendung von $C_1$-$C_{30}$-, bevorzugt $C_9$-$C_{24}$-Alkylphenolen, deren Kondensationsprodukten mit Aldehyden sowie entsprechende Alkoxilate als Lubricity-Additive für Mitteldestillate.

Aufgabe der vorliegenden Erfindung war es, multifunktionelle Additive zu finden, die in weitgehend von Schwefel und aromatischen Verbindungen befreiten Mitteldestillaten zu einer Verbesserung der Schmierwirkung führen. Gleichzeitig sollen diese Additive auch die in verschiedenen Ölqualitäten unzureichende Wirksamkeit von Paraffindispergatoren, die eine Sedimentation der in solchen Mitteldestillaten in der Kälte ausfallenden Paraffinkristalle verzögern bzw. verhindern, verbessern.

Überraschenderweise wurde gefunden, daß Polymermischungen, die hydroxylgruppenhaltige Copolymere und gleichzeitig polare Stickstoffverbindungen enthalten, in der Lage sind, sowohl die Schmierfähigkeit als auch die Kaltfließeigenschaften von Mitteldestillaten und insbesondere die Paraffindispergierung günstig zu beeinflussen. Die Mischungen weisen dabei den Vorteil auf, daß zur Erzielung des Effekts niedrigere Dosierraten erforderlich sind, als es bei den Komponenten der Mischungen der Fall ist.

Gegenstand der Erfindung ist ein Additiv für Brennstofföle, enthaltend

A) 10 bis 90 Gew.-% mindestens eines Copolymers aus Ethylen und mindestens einem weiteren olefinisch ungesättigten Comonomer, das eine oder mehrere Hydroxylgruppen enthält, und
B) 90 bis 10 Gew.-% mindestens einer polaren stickstoffhaltigen Verbindung.

Bei den olefinisch ungesättigten Verbindungen, die die Hydroxylgruppen enthaltenden Comonomere der Komponente A) ausmachen, handelt es sich vorzugsweise um Vinylester, Acrylester, Methacrylester, Alkylvinylether und/oder Alkene, die Hydroxyalkyl-, Hydroxyalkenyl-, Hydroxycycloalkyl- oder Hydroxyarylreste tragen. Diese Reste enthalten wenigstens eine Hydroxylgruppe, die an einer beliebigen Stelle des Restes stehen kann, bevorzugt aber am Kettenende (ω-Stellung) bzw. in para-Stellung bei Ringsystemen steht. Die Copolymere, die die Komponente A) ausmachen, können gegebenenfalls neben Ethylen und olefinisch ungesättigten Verbindungen mit Hydroxylgruppen noch weitere Comonomere enthalten.

Bei den Vinylestern handelt es sich vorzugsweise um solche der Formel 1

$$CH_2 = CH - OCOR^1 \quad (1)$$

worin $R^1$ $C_1$-$C_{30}$-Hydroxyalkyl, vorzugsweise $C_1$-$C_{12}$-Hydroxyalkyl, speziell $C_2$ $C_6$-Hydroxyalkyl sowie die entsprechenden Hydroxyoxalkylreste bedeutet. Geeignete Vinylester umfassen 2-Hydroxyethylvinylester, α-Hydroxypropylvinylester, 3-Hydroxypropylvinylester und 4-Hydroxybutylvinylester.

Bei den Acrylestern handelt es sich vorzugsweise um solche der Formel 2

$$CH_2 = CR^2 - COOR^3 \quad (2)$$

worin $R^2$ Wasserstoff oder Methyl und $R^3$ $C_1$-$C_{30}$-Hydroxyalkyl, vorzugsweise $C_1$-$C_{12}$-Hydroxyalkyl, speziell $C_2$-$C_6$-Hydroxyalkyl sowie die entsprechenden Hydroxyoxalkylreste bedeutet. Geeignete Acrylester umfassen Hydroxyethylacrylat, Diethylenglykolmonoacrylat, 2-Hydroxypropylacrylat, 3-Hydroxypropylacrylat, Hydroxyisopropylacrylat, 4-Hydroxybutylacrylat, Glycerinmonoacrylat, sowie die entsprechenden Ester der Methacrylsäure.

Bei den Alkylvinylethern handelt es sich vorzugsweise um Verbindungen der Formel 3

$$CH_2 = CH - OR^4 \quad (3)$$

worin $R^4$ $C_1$-$C_{30}$-Hydroxyalkyl, vorzugsweise $C_1$-$C_{12}$-Hydroxyalkyl, speziell $C_2$-$C_6$-Hydroxyalkyl sowie die entsprechenden Hydroxyoxalkylreste bedeutet. Geeignete Alkylvinylether umfassen 2-Hydroxyethylvinylether, Hydroxypropylvinylether, Hexandiolmonovinylether, 4-(Hydroxybutyl)vinylether, Diethylenglykolmonovinylether und Cyclohexandimethanolmonovinylether.

Bei den Alkenen handelt es sich vorzugsweise um einfach ungesättigte Hydroxykohlenwasserstoffe mit 3 bis 30 Kohlenstoffatomen, insbesondere 4 bis 16 Kohlenstoffatomen und speziell 5 bis 12 Kohlenstoffatomen. Bevorzugte Hydroxykohlenwasserstoffe sind auch solche, bei denen die Kohlenstoffkette durch Sauerstoff unterbrochen ist. Geeignete Alkene umfassen Dimethylvinylcarbinol (= 2-Methyl-3-buten-2-ol), Allyloxypropandiol, 2-Buten-1,4-diol, 1-Buten-3-ol, 3-Buten-1-ol, 2-Buten-1-ol, 1-Penten-3-ol, 1-Penten-4-ol, 2-Methyl-3-buten-1-ol, 1-Hexen-3-ol, 5-Hexen-1-ol und 7-Octen-1,2-diol.

Der molare Anteil an hydroxyfunktionalisierten Comonomeren am Copolymeren (A) beträgt vorzugsweise 0,5 bis 13 %, insbesondere 3 bis 10 %. Die OH-Zahl der Copolymeren beträgt vorzugsweise zwischen 1 und 800, insbesondere zwischen 5 und 200 und speziell zwischen 10 und 100 mg KOH/g Polymer.

Die Schmelzviskositäten der hydroxyfunktionalisierten Copolymere (A) bei 140°C liegen vorzugsweise unterhalb 10.000 mPas, insbesondere zwischen 10 und 1000 mPas und speziell zwischen 15 und 500 mPas. Bevorzugt sind Copolymere mit mittleren Molekulargewichten (Zahlenmittel) von 500 - 100 000, insbesondere von 1000 bis 50000, speziell 1 000 bis 10 000, Einheiten. Die Schmelzviskositäten und Molekulargewichte müssen in jedem Fall so bemessen sein, daß die Copolymere öllöslich sind.

Die Komponente (A) der erfindungsgemäßen Additive enthält neben Ethylen mindestens ein Comonomeres mit Hydroxylgruppen. Sie kann noch weitere, beispielsweise ein, zwei oder drei weitere olefinisch ungesättigte Comonomere enthalten. Solche olefinisch ungesättigten Comonomere sind beispielsweise Vinylester, Acrylsäure, Methacrylsäure, Acrylester, Methacrylester, Vinylether, und Olefine. Besonders bevorzugte Vinylester sind Vinylacetat,Vinylhexanoat, Vinyloctanat, Vinyl-2-Ethylhexanoat, Vinyllaurat, Vinylpropionat und Vinylester von Neocarbonsäuren mit 8, 9, 10, 11 oder 12 Kohlenstoffatomen. Besonders bevorzugte Acryl- und Methacrylester sind solche mit Alkoholen mit 1 bis 20 Kohlenstoffatomen, insbesondere von Methanol, Ethanol, Propanol, n-Butanol, iso-Butanol und tert.-Butanol. Besonders bevorzugte Olefine sind solche mit 3 bis 10 Kohlenstoffatomen, speziell Propen, 1-Buten, Isobutylen, Diisobutylen, 4-Methylpenten-1, Hepten, Octen, Norbornen und Hexen. Besonders bevorzugt sind Terpolymere aus Ethylen, einem hydroxyfunktionalisierten Comonomer und entweder Vinylacetat oder einem Vinylester einer Neocarbonsäure mit 8 bis 12 Kohlenstoffatomen. In einer bevorzugten Ausführungsform der Erfindung enthalten die hydroxylgruppenhaltigen Copolymere (A) bis zu 16 mol-%, insbesondere 3 bis 14 mol-% dieser Vinyl- oder (Meth)Acrylester.

Die erfindungsgemäßen Additive enthalten mindestens eine polare Stickstoffverbindung (B). In bevorzugten Ausführungsformen der Erfindung handelt es sich bei diesen polaren Stickstoffverbindungen um solche, die durch die Reaktion einer Stickstoffverbindung der Formel $NR^6R^7R^8$, worin $R^6$, $R^7$ und $R^8$ gleich oder verschieden sein können, und wenigstens eine dieser Gruppen für $C_8$-$C_{36}$-Alkyl, $C_6$-$C_{36}$-Cycloalkyl, $C_8$-$C_{36}$-Alkenyl, insbesondere $C_{12}$-$C_{24}$-Alkyl, $C_{12}$-$C_{24}$-Alkenyl oder Cyclohexyl steht, und die übrigen Gruppen entweder Wasserstoff, $C_1$-$C_{36}$-Alkyl, $C_2$-$C_{36}$-Alkenyl, Cyclohexyl, oder eine Gruppe der Formeln $-(A-O)_x-E$ oder $-CH_2)_n-NYZ$ bedeuten, worin A für eine Ethylen- oder Propylengruppe steht, x eine Zahl von 1 bis 50, E = H, $C_1$-$C_{30}$-Alkyl, $C_5$-$C_{12}$-Cycloalkyl oder $C_6$-$C_{30}$-Aryl, und n 2, 3 oder

4 bedeuten, und Y und Z unabhängig voneinander H, $C_1$-$C_{30}$-Alkyl oder -(A-O)$_x$-E bedeuten, mit einer Verbindung, die eine Acylgruppe enthält. Unter Acylgruppe wird hier eine funktionelle Gruppe folgender Formel verstanden:

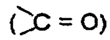

Bevorzugte Carbonylgruppen enthaltende Verbindungen sind Carbonsäuren sowie deren Anhydride und Ester. Im folgenden werden bevorzugte polare stickstoffhaltige Verbindungen genannt.

B1) Umsetzungsprodukte von Alkenyl-spirobislactonen der Formel 4

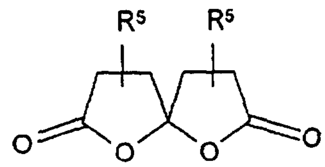

(4)

wobei $R^5$ jeweils $C_8$-$C_{200}$-Alkenyl bedeutet, mit Aminen der Formel $NR^6R^7R^8$. Geeignete Umsetzungsprodukte sind in EP-A-0 413 279 aufgeführt. Je nach Reaktionsbedingung erhält man bei der Umsetzung von Verbindungen der Formel (4) mit den Aminen Amide oder Amid-Ammoniumsalze.

B2) Amide bzw. Ammoniumsalze von Aminoalkylenpolycarbonsäuren mit sekundären Aminen der Formeln 5 und 6

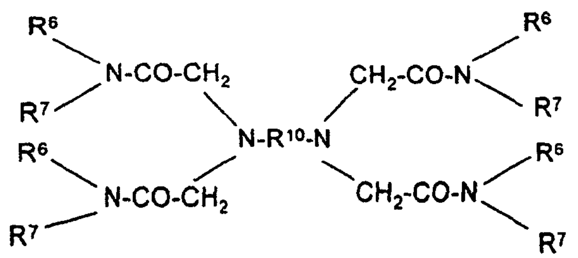

(5)

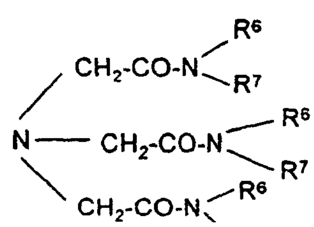

(6)

in denen

$R^{10}$ einen geradkettigen oder verzweigten Alkylenrest mit 2 bis 6 Kohlenstoffatomen oder den Rest der Formel 7

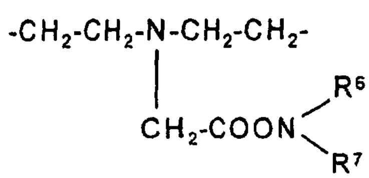

(7)

in der $R^6$ und $R^7$ insbesondere Alkylreste mit 10 bis 30, bevorzugt 14 bis 24 C-Atomen bedeuten, wobei die Amidstrukturen auch zum Teil oder vollständig in Form der Ammoniumsalzstruktur der Formel 8

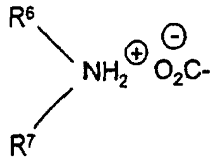

(8)

vorliegen können.

Die Amide bzw. Amid-Ammoniumsalze bzw. Ammoniumsalze z.B. der Nitrilotriessigsäure, der Ethylendiamintetraessigsäure oder der Propylen-1,2-diamintetraessigsäure werden durch Umsetzung der Säuren mit 0,5 bis 1,5 Mol Amin, bevorzugt 0,8 bis 1,2 Mol Amin pro Carboxylgruppe erhalten. Die Umsetzungstemperaturen betragen etwa 80 bis 200°C, wobei zur Herstellung der Amide eine kontinuierliche Entfernung des entstandenen Reaktionswasser erfolgt. Die Umsetzung muß jedoch nicht vollständig zum Amid geführt werden, vielmehr können 0 bis 100 Mol-% des eingesetzten Amins in Form des Ammoniumsalzes vorliegen. Unter analogen Bedingungen können auch die unter B1) genannten Verbindungen hergestellt werden.

Als Amine der Formel 9

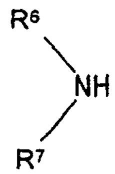

(9)

kommen insbesondere Dialkylamine in Betracht, in denen $R^6$, $R^7$ einen geradkettigen Alkylrest mit 10 bis 30 Kohlenstoffatomen, vorzugsweise 14 bis 24 Kohlenstoffatomen, bedeutet. Im einzelnen seien Dioleylamin, Dipalmitinamin, Dikokosfettamin und Dibehenylamin und vorzugsweise Ditalgfettamin genannt.

B3) Quartäre Ammoniumsalze der Formel 10

$$^{\oplus}NR^6R^7R^8R^{11}X^{\ominus} \qquad (10)$$

wobei $R^6$, $R^7$, $R^8$ die oben gegebene Bedeutung haben und $R^{11}$ für $C_1$-$C_{30}$-Alkyl, bevorzugt $C_1$-$C_{22}$-Alkyl, $C_2$-$C_{30}$-Alkenyl, bevorzugt $C_2$-$C_{22}$-Alkenyl, Benzyl oder einen Rest der Formel $-(CH_2-CH_2-O)_n-R^{12}$ steht, wobei $R^{12}$ Wasserstoff oder ein Fettsäurerest der Formel $C(O)-R^{13}$ ist, mit $R^{13}$ = $C_6$-$C_{40}$-Alkenyl, n eine Zahl von 1 bis 30 und X für Halogen, bevorzugt Chlor, oder ein Methosulfat steht.

Beispielhaft für derartige quartäre Ammoniumsalze seien genannt: Dihexadecyldimethylammoniumchlorid, Distearyldimethylammoniumchlorid, Quaternisierungsprodukte von Estern des Di- und Triethanolamins mit langkettigen Fettsäuren (Laurinsäure, Myristinsäure, Palmitinsäure, Stearinsäure, Behensäure, Ölsäure und Fettsäuremischungen, wie Cocosfettsäure, Talgfettsäure, hydrierte Talgfettsäure, Tallölfettsäure), wie N-Methyltriethanolammoniumdistearylesterchlorid, N-Methyltriethanolammoniumdistearylestermethosulfat, N,N-Dimethyldiethanolammoniumdistearylesterchlorid, N-Methyltriethanolammonium-dioleylesterchlorid, N-Methyltriethanolammoniumtrilaurylestermethosulfat, N-Methyltriethanolammoniumtristearylestermethosulfat und deren Mischungen.

B4) Verbindungen der Formel 11

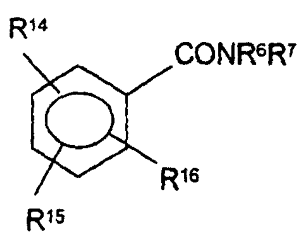

(11)

in denen $R^{14}$ für $CONR^6R^7$ oder $CO_2^{-}$ $^{+}H_2NR^6R^7$ steht,
$R^{15}$ und $R^{16}$ für H, $CONR^{17}{}_2$, $CO_2R^{17}$ oder $OCOR^{17}$, $-OR^{17}$, $-R^{17}$ oder $-NCOR^{17}$ stehen, und
$R^{17}$ Alkyl, Alkoxyalkyl oder Polyalkoxyalkyl ist und mindestens 10 Kohlenstoffatome aufweist.

Bevorzugte Carbonsäuren bzw. Säurederivate sind Phthalsäure(anhydrid), Trimellit, Pyromellit(dianhydrid), Isophthalsäure, Terephthalsäure, Cyclohexandicarbonsäure(anhydrid), Maleinsäure(anhydrid), Alkenylbernsteinsäure (anhydrid). Die Formulierung (anhydrid) bedeutet, daß auch die Anhydride der genannten Säuren bevorzugte Säurederivate sind.

Wenn die Verbindungen (11) Amide oder Aminsalze sind, sind sie vorzugsweise von einem sekundären Amin, das eine Wasserstoff und Kohlenstoff enthaltende Gruppe mit mindestens 10 Kohlenstoffatomen enthält.

Es ist bevorzugt, daß $R^{17}$ 10 bis 30, insbesondere 10 bis 22, z.B. 14 bis 20 Kohlenstoffatome enthält und vorzugsweise geradkettig oder an der 1- oder 2-Position verzweigt ist. Die anderen Wasserstoff und Kohlenstoff enthaltenden Gruppen können kürzer sein, z.B. weniger als 6 Kohlenstoffatome enthalten, oder können, falls gewünscht, mindestens 10 Kohlenstoffatome aufweisen. Geeignete Alkylgruppen schließen Methyl, Ethyl, Propyl, Hexyl, Decyl, Dodecyl, Tetradecyl, Hexadecyl, Eicosyl und Docosyl sowie deren Mischungen wie Cocosfettalkyl, Talgfettalkyl und Behenyl ein.

Des weiteren sind Polymere geeignet, die mindestens eine Amid- oder Ammoniumgruppe direkt an das Gerüst des Polymers gebunden enthalten, wobei die Amid- oder Ammoniumgruppe mindestens eine Alkylgruppe von mindestens 8 C-Atomen am Stickstoffatom trägt. Derartige Polymere können auf verschiedene Arten hergestellt werden. Eine Art ist, ein Polymer zu verwenden, das mehrere Carbonsäure oder -Anhydridgruppen enthält, und dieses Polymer mit einem Amin der Formel $NHR^6R^7$ umzusetzen, um das gewünschte Polymer zu erhalten.

Als Polymere sind dazu allgemein Copolymere aus ungesättigten Estern wie $C_1$-$C_{40}$-Alkyl(meth)acrylaten, Fumarsäuredi-$C_1$-$C_{40}$-alkylester, $C_1$-$C_{40}$-Alkylvinylethern, $C_1$-$C_{40}$-Alkylvinylestern oder $C_2$-$C_{40}$-Olefinen (linear, verzweigt, aromatisch) mit ungesättigten Carbonsäuren bzw. deren reaktiven Derivaten, wie z.B. Carbonsäureanhydriden (Acrylsäure, Methacrylsäure, Maleinsäure, Fumarsäure, Tetrahydrophthalsäure, Citraconsäure, bevorzugt Maleinsäureanhydrid) geeignet.

Carbonsäuren werden vorzugsweise mit 0,1 bis 1,5 mol, insbesondere 0,5 bis 1,2 mol Amin pro Säuregruppe, Carbonsäureanhydride vorzugsweise mit 0,1 bis 2,5, insbesondere 0,5 bis 2,2 mol Amin pro Säureanhydridgruppe umgesetzt, wobei je nach Reaktionsbedingungen Amide, Ammoniumsalze, Amid-Ammoniumsalze oder Imide entstehen. So ergeben Copolymere, die ungesättigte Carbonsäureanhydride enthalten, bei der Umsetzung mit einem sekundären Amin auf Grund der Reaktion mit der Anhydridgruppe zur Hälfte Amid und zur Hälfte Aminsalze. Durch Erhitzen kann unter Bildung des Diamids Wasser abgespalten werden.

Besonders geeignete Beispiele amidgruppenhaltiger Polymere zur erfindungsgemäßen Verwendung sind:

B5) Copolymere (a) eines Dialkylfumarats, -maleats, -citraconats oder - itaconats mit Maleinsäureanhydrid, oder (b) von Vinylestern, z.B. Vinylacetat oder Vinylstearat mit Maleinsäureanhydrid, oder (c) eines Dialkylfumarats, -maleats, - citraconats oder -itaconats mit Maleinsäureanhydrid und Vinylacetat.

Besonders geeignete Beispiele für diese Polymere sind Copolymere von Didodecylfumarat, Vinylacetat und Maleinsäureanhydrid; Ditetradecylfumarat, Vinylacetat und Maleinsäureanhydrid; Di-hexadecylfumarat, Vinylacetat und Maleinsäureanhydrid; oder den entsprechenden Copolymeren, bei denen anstelle des Fumarats das Itaconat verwendet wird.

In den oben genannten Beispielen geeigneter Polymere wird das gewünschte Amid durch Umsetzung des Polymers, das Anhydridgruppen enthält, mit einem sekundären Amin der Formel $HNR^6R^7$ (gegebenenfalls außerdem mit einem Alkohol, wenn ein Esteramid gebildet wird) erhalten. Wenn Polymere, die eine Anhydridgruppe enthalten, umgesetzt werden, werden die resultierenden Aminogruppen Ammoniumsalze und Amide sein. Solche Polymere können verwendet werden, mit der Maßgabe, daß sie mindestens zwei Amidgruppen enthalten.

Es ist wesentlich, daß das Polymer, das mindestens zwei Amidgruppen enthält, mindestens eine Alkylgruppe mit mindestens 10 Kohlenstoffatomen enthält. Diese langkettige Gruppe, die eine geradkettige oder verzweigte Alkylgruppe sein kann, kann über das Stickstoffatom der Amidgruppe gebunden vorliegen.

Die dafür geeigneten Amine können durch die Formel $R^6R^7NH$ und die Polyamine durch $R^6NH[R^{19}NH]_xR^7$ wiedergegeben werden, wobei $R^{19}$ eine zweiwertige Kohlenwasserstoffgruppe, vorzugsweise eine Alkylen- oder kohlenwasserstoffsubstituierte Alkylengruppe, und x eine ganze Zahl, vorzugsweise zwischen 1 und 30 ist. Vorzugsweise enthalten einer der beiden oder beide Reste $R^6$ und $R^7$ mindestens 10 Kohlenstoffatome, beispielsweise 10 bis 20 Kohlenstoffatome, zum Beispiel Dodecyl, Tetradecyl, Hexadecyl oder Octadecyl.

Beispiele geeigneter sekundärer Amine sind Dioctylamin und solche, die Alkylgruppen mit mindestens 10 Kohlenstoffatomen enthalten, beispielsweise Didecylamin, Didodecylamin, Dicocosamin (d.h. gemischte $C_{12}$-$C_{14}$-Amine), Dioctadecylamin, Hexadecyloctadecylamin, Di-(hydriertes Talg)-Amin (annähernd 4 Gew.-% n-$C_{14}$-Alkyl, 30 Gew.-% n-$C_{10}$-Alkyl, 60 Gew.-% n-$C_{18}$-Alkyl, der Rest ist ungesättigt).

Beispiele geeigneter Polyamine sind N-Octadecylpropandiamin, N,N'-Dioctadecylpropandiamin, N-Tetradecylbutandiamin und N,N,-Dihexadecylhexandiamin. N-Cocos-propylendiamin ($C_{12}$/$C_{14}$-Alkyl-propylen-diamin),

N-Talg-propylen-diamin ($C_{16}/C_{18}$-Alkyl-propylen-diamin).

Die amidhaltigen Polymere haben üblicherweise ein durchschnittliches Molekulargewicht (Zahlenmittel) von 1000 bis 500 000, zum Beispiel 2 000 bis 100 000.

B6) Copolymere des Styrols, seiner Derivate oder aliphatischer Olefine mit 2 bis 40 C-Atomen, bevorzugt mit 6 bis 20 C-Atomen und olefinisch ungesättigten Carbonsäuren oder Carbonsäureanhydriden, die mit Aminen der Formel $HNR^6R^7$ umgesetzt sind. Die Umsetzung kann vor oder nach der Polymerisation vorgenommen werden.

Im einzelnen leiten sich die Struktureinheiten der Copolymere von z.B. Maleinsäure, Fumarsäure, Tetrahydrophthalsäure, Citraconsäure, bevorzugt Maleinsäureanhydrid ab. Sie können sowohl in Form ihrer Homopolymeren als auch der Copolymeren eingesetzt werden. Als Comonomere sind geeignet: Styrol und Alkylstyrole, geradkettige und verzweigte Olefine mit 2 bis 40 Kohlenstoffatomen, sowie deren Mischungen untereinander. Beispielsweise seien genannt: Styrol, $\alpha$-Methylstyrol, Dimethylstyrol, $\alpha$-Ethylstyrol, Diethylstyrol, i-Propylstyrol, tert.-Butylstyrol, Ethylen, Propylen, n-Butylen, Di-i-butylen, Decen, Dodecen, Tetradecen, Hexadecen, Octadecen. Bevorzugt sind Styrol und Isobuten, besonders bevorzugt ist Styrol.

Als Polymere seien beispielsweise im einzelnen genannt: Polymaleinsäure, ein molares, alternierend aufgebautes Styrol/Maleinsäure-Copolymer, statistisch aufgebaute Styrol/Maleinsäure-Copolymere im Verhältnis 10:90 und ein alternierendes Copolymer aus Maleinsäure und i-Buten. Die molaren Massen der Polymeren betragen im allgemeinen 500 g/mol bis 20 000 g/mol, bevorzugt 700 bis 2000 g/mol.

Die Umsetzung der Polymeren oder Copolymeren mit den Aminen erfolgt bei Temperaturen von 50 bis 200°C im Verlauf von 0,3 bis 30 Stunden. Das Amin wird dabei in Mengen von ungefähr einem Mol pro Mol einpolymerisiertem Dicarbonsäureanhydrid, d.i. ca.0,9 bis 1,1 Mol/Mol, angewandt. Die Verwendung größerer oder geringerer Mengen ist möglich, bringt aber keinen Vorteil. Werden größere Mengen als ein Mol angewandt, erhält man zum Teil Ammoniumsalze, da die Bildung einer zweiten Amidgruppierung höhere Temperaturen, längere Verweilzeiten und Wasserauskreisen erfordert. Werden geringere Mengen als ein Mol angewandt, findet keine vollständige Umsetzung zum Monoamid statt und man erhält eine dementsprechend verringerte Wirkung.

Anstelle der nachträglichen Umsetzung der Carboxylgruppen in Form des Dicarbonsäureanhydrids mit Aminen zu den entsprechenden Amiden kann es manchmal von Vorteil sein, die Monoamide der Monomeren herzustellen und dann bei der Polymerisation direkt einzupolymerisieren. Meist ist das jedoch technisch viel aufwendiger, da sich die Amine an die Doppelbindung der monomeren Mono- und Dicarbonsäure anlagern können und dann keine Copolymerisation mehr möglich ist.

B7) Copolymere, bestehend aus 10 bis 95 Mol-% eines oder mehrerer Alkylacrylate oder Alkylmethacrylate mit $C_1$-$C_{26}$-Alkylketten und aus 5 bis 90 Mol-% einer oder mehrerer ethylenisch ungesättigter Dicarbonsäuren oder deren Anhydriden, wobei das Copolymere weitgehend mit einem oder mehreren primären oder sekundären Aminen zum Monoamid oder Amid/Ammoniumsalz der Dicarbonsäure umgesetzt ist.

Die Copolymeren bestehen zu 10 bis 95 Mol-%, bevorzugt zu 40 bis 95 Mol-% und besonders bevorzugt zu 60 bis 90 Mol-% aus Alkyl(meth)acrylaten und zu 5 bis 90 Mol-%, bevorzugt zu 5 bis 60 Mol-% und besonders bevorzugt zu 10 bis 40 Mol-% aus den olefinisch ungesättigten Dicarbonsäurederivaten.

Die Alkylgruppen der Alkyl(meth)acrylate enthalten 1 bis 26, bevorzugt 4 bis 22 und besonders bevorzugt 8 bis 18 Kohlenstoffatome. Sie sind bevorzugt geradkettig und unverzweigt. Es können jedoch auch bis zu 20 Gew.-% cyclische und/oder verzweigte Anteile enthalten sein.

Beispiele für besonders bevorzugte Alkyl(meth)acrylate sind n-Octyl(meth)acrylat, n-Decyl(meth)acrylat, n-Dodecyl(meth)acrylat, n-Tetradecyl(meth)acrylat, n-Hexadecyl(meth)acrylat und n-Octadecyl(meth)acrylat sowie Mischungen davon.

Beispiele ethylenisch ungesättigter Dicarbonsäuren sind Maleinsäure, Tetrahydrophthalsäure, Citraconsäure und Itaconsäure bzw. deren Anhydride sowie Fumarsäure. Bevorzugt ist Maleinsäureanhydrid.

Als Amine kommen Verbindungen der Formel $HNR^6R^7$ in Betracht.

In der Regel ist es von Vorteil, die Dicarbonsäuren in Form der Anhydride, soweit verfügbar, bei der Copolymerisation einzusetzen, z.B. Maleinsäureanhydrid, Itaconsäureanhydrid, Citraconsäureanhydrid und Tetrahydrophthalsäureanhydrid, da die Anhydride in der Regel besser mit den (Meth)acrylaten copolymerisieren. Die Anhydridgruppen der Copolymeren können dann direkt mit den Aminen umgesetzt werden.

Die Umsetzung der Polymeren mit den Aminen erfolgt bei Temperaturen von 50 bis 200°C im Verlauf von 0,3 bis 30 Stunden. Das Amin wird dabei in Mengen von ungefähr einem bis zwei Mol pro Mol einpolymerisiertem Dicarbonsäureanhydrid, d.i. ca. 0,9 bis 2,1 Mol/Mol angewandt. Die Verwendung größerer oder geringerer Mengen ist möglich, bringt aber keinen Vorteil. Werden größere Mengen als zwei Mol angewandt, liegt freies Amin vor. Werden geringere Mengen als ein Mol angewandt, findet keine vollständige Umsetzung zum Monoamid statt und man erhält eine dementsprechend verringerte Wirkung.

In einigen Fällen kann es von Vorteil sein, wenn die Amid/Ammoniumsalzstruktur aus zwei unterschiedlichen Aminen aufgebaut wird. So kann beispielsweise ein Copolymer aus Laurylacrylat und Maleinsäureanhydrid zuerst mit einem sekundären Amin, wie hydriertem Ditalgfettamin zum Amid umgesetzt werden, wonach die aus dem Anhydrid

stammende freie Carboxylgruppe mit einem anderen Amin, z.B. 2-Ethylhexylamin zum Ammoniumsalz neutralisiert wird. Genauso ist die umgekehrte Vorgehensweise denkbar: Zuerst wird mit Ethylhexylamin zum Monoamid, dann mit Ditalgfettamin zum Ammoniumsalz umgesetzt. Vorzugsweise wird dabei mindestens ein Amin verwendet, welches mindestens eine geradkettige, unverzweigte Alkylgruppe mit mehr als 16 Kohlenstoffatomen besitzt. Es ist dabei nicht erheblich, ob dieses Amin am Aufbau der Amidstruktur oder als Ammoniumsalz der Dicarbonsäure vorliegt.

Anstelle der nachträglichen Umsetzung der Carboxylgruppen bzw. des Dicarbonsäureanhydrids mit Aminen zu den entsprechenden Amiden oder Amid/Ammoniumsalzen, kann es manchmal von Vorteil sein, die Monoamide bzw. Amid/Ammoniumsalze der Monomeren herzustellen und dann bei der Polymerisation direkt einzupolymerisieren. Meist ist das jedoch technisch viel aufwendiger, da sich die Amine an die Doppelbindung der monomeren Dicarbonsäure anlagern können und dann keine Copolymerisation mehr möglich ist.

B8) Terpolymere auf Basis von α,β-ungesättigten Dicarbonsäureanhydriden, α,β-ungesättigten Verbindungen und Polyoxyalkylenethern von niederen, ungesättigten Alkoholen, die dadurch gekennzeichnet sind, daß sie 20 - 80, bevorzugt 40 - 60 Mol-% an bivalenten Strukturеinheiten der Formeln 12 und/oder 14, sowie gegebenenfalls 13, wobei die Struktureinheiten 13 von nicht umgesetzten Anhydridresten stammen,

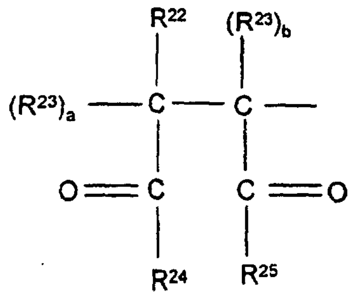

(12)

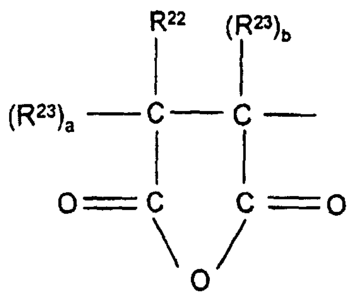

(13)

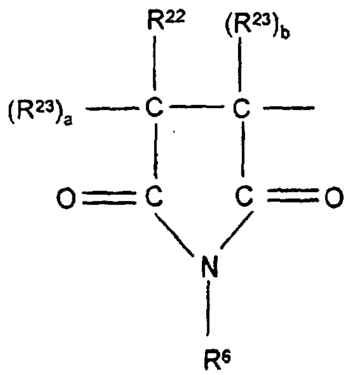

(14)

wobei

$R^{22}$ und $R^{23}$ unabhängig voneinander Wasserstoff oder Methyl,

a, b gleich Null oder Eins und a + b gleich Eins,

$R^{24}$ und $R^{25}$ gleich oder verschieden sind und für die Gruppen $-NHR^6$, $N(R^6)_2$ und/oder $-OR^{27}$ stehen, und $R^{27}$ für ein

Kation der Formel $H_2N(R^6)_2^{\oplus}$ oder $H_3NR^{6\oplus}$ steht,
19 - 80 Mol-%, bevorzugt 39-60 Mol-% an bivalenten Struktureinheiten der Formel 15

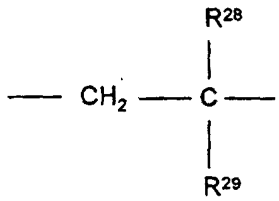

(15)

worin
$R^{28}$ Wasserstoff oder $C_1$-$C_4$-Alkyl und
$R^{29}$ $C_6$-$C_{60}$-Alkyl oder $C_6$-$C_{18}$-Aryl bedeuten und
1 - 30 Mol-%, bevorzugt 1 - 20 Mol-% an bivalenten Struktureinheiten der Formel 16

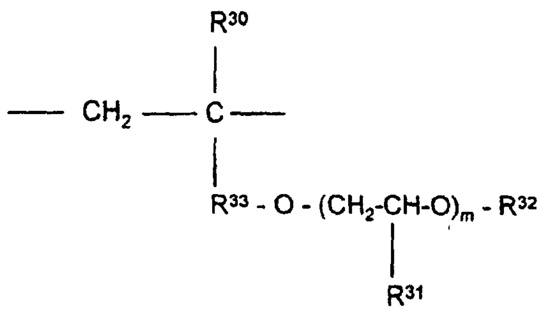

(16)

worin
$R^{30}$ Wasserstoff oder Methyl,
$R^{31}$ Wasserstoff oder $C_1$-$C_4$-Alkyl,
$R^{33}$ $C_1$-$C_4$-Alkylen,
m eine Zahl von 1 bis 100,
$R^{32}$ $C_1$-$C_{24}$-Alkyl, $C_5$-$C_{20}$-Cycloalkyl, $C_6$-$C_{18}$-Aryl oder -C(O)-$R^{34}$, wobei
$R^{34}$ $C_1$-$C_{40}$-Alkyl, $C_5$-$C_{10}$-Cycloalkyl oder $C_6$ $C_{18}$-Aryl,
enthalten.

Die vorgenannten Alkyl-, Cycloalkyl- und Arylreste können gegebenenfalls substituiert sein. Geeignete Substituenten der Alkyl- und Arylreste sind beispielsweise ($C_1$-$C_6$)-Alkyl, Halogene, wie Fluor, Chlor, Brom und Jod, bevorzugt Chlor und ($C_1$-$C_6$)-Alkoxy.

Alkyl steht hier für einen geradkettigen oder verzweigten Kohlenwasserstoffrest. Im einzelnen seien genannt: n-Butyl, tert.-Butyl, n-Hexyl, n-Octyl, Decyl, Dodecyl, Tetradecyl, Hexadecyl, Octadecyl, Dodecenyl, Tetrapropenyl, Tetradecenyl, Pentapropenyl, Hexadecenyl, Octadecenyl und Eicosanyl oder Mischungen, wie Cocosalkyl, Talgfettalkyl und Behenyl.

Cycloalkyl steht hier für einen cyclischen aliphatischen Rest mit 5 - 20 Kohlenstoffatomen. Bevorzugte Cycloalkylreste sind Cyclopentyl und Cyclohexyl.

Aryl steht hier für einen gegebenenfalls substituiertes aromatisches Ringsystem mit 6 bis 18 Kohlenstoffatomen.

Die Terpolymere bestehen aus den bivalenten Struktureinheiten der Formeln 12 und/oder 14 sowie 15 und 16 und ggf. 13. Sie enthalten lediglich noch in an sich bekannter Weise die bei der Polymerisation durch Initiierung, Inhibierung und Kettenabbruch entstandenen Endgruppen.

Im einzelnen leiten sich Struktureinheiten der Formeln 12 bis 14 von $\alpha,\beta$-ungesättigten Dicarbonsäureanhydriden der Formeln 17 und 18

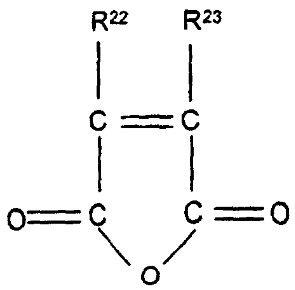

(17)

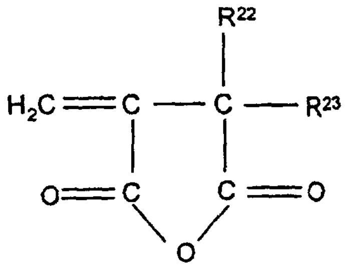

(18)

wie Maleinsäureanhydrid, Itaconsäureanhydrid, Citraconsäureanhydrid, bevorzugt Maleinsäureanhydrid, ab.

Die Struktureinheiten der Formel 15 leiten sich von den $\alpha,\beta$-ungesättigten Verbindungen der Formel 19 ab.

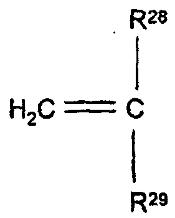

(19)

Beispielhaft seien die folgenden $\alpha,\beta$-ungesättigten Olefine genannt: Styrol, $\alpha$-Methylstyrol, Dimethylstyrol, $\alpha$-Ethylstyrol, Diethylstyrol, i-Propylstyrol, tert.-Butylstyrol, Diisobutylen und $\alpha$-Olefine, wie Decen, Dodecen, Tetradecen, Pentadecen, Hexadecen, Octadecen, $C_{20}$-$\alpha$-Olefin, $C_{24}$-$\alpha$-Olefin, $C_{30}$-$\alpha$-Olefin, Tripropenyl, Tetrapropenyl, Pentapropenyl sowie deren Mischungen. Bevorzugt sind $\alpha$-Olefine mit 10 bis 24 C-Atomen und Styrol, besonders bevorzugt sind $\alpha$-Olefine mit 12 bis 20 C-Atomen.

Die Struktureinheiten der Formel 16 leiten sich von Polyoxyalkylenethern niederer, ungesättigter Alkohole der Formel 20 ab.

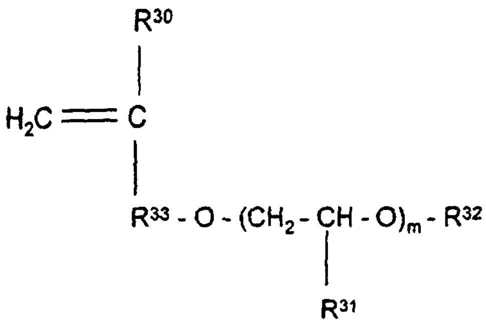

(20)

Bei den Monomeren der Formel 20 handelt es sich um Veretherungsprodukte ($R^{32}$ = -C(O)$R^{34}$) oder Veresterungsprodukte ($R^{32}$ = -C(O)$R^{34}$) von Polyoxyalkylenethern ($R^{32}$ = H).

Die Polyoxyalkylenether ($R^{32}$ = H) lassen sich nach bekannten Verfahren durch Anlagerung von α-Olefinoxiden, wie Ethylenoxid, Propylenoxid und/oder Butylenoxid an polymerisierbare niedere, ungesättigte Alkohole der Formel 21

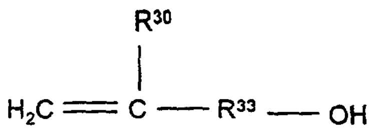

(21)

herstellen. Solche polymerisierbaren niederen ungesättigten Alkohole sind z.B. Allylalkohol, Methallylalkohol, Butenole, wie 3-Buten-1-ol und 1-Buten-3-ol oder Methylbutenole, wie 2-Methyl-3-buten-1-ol, 2-Methyl-3-buten-2-ol und 3-Methyl-3-buten-1-ol. Bevorzugt sind Anlagerungsprodukte von Ethylenoxid und/oder Propylenoxid an Allylalkohol.

Eine nachfolgende Veretherung dieser Polyoxyalkylenether zu Verbindungen der Formel 20 mit $R^{32}$ = $C_1$-$C_{24}$-Alkyl, Cycloalkyl oder Aryl erfolgt nach an sich bekannten Verfahren. Geeignete Verfahren sind z.B. aus J. March, Advanced Organic Chemistry, 2. Auflage, S. 357f (1977) bekannt. Diese Veretherungsprodukte der Polyoxyalkylenether lassen sich auch herstellen, indem man α-Olefinoxide, bevorzugt Ethylenoxid, Propylenoxid und/oder Butylenoxid an Alkohole der Formel 22

$$R^{32} - OH \qquad (22)$$

worin $R^{32}$ gleich $C_1$-$C_{24}$-Alkyl, $C_5$-$C_{20}$-Cycloalkyl oder $C_6$-$C_{18}$-Aryl, nach bekannten Verfahren anlagert und mit polymerisierbaren niederen, ungesättigten Halogeniden der Formel 23

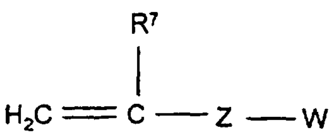

(23)

umsetzt, wobei W für ein Halogenatom steht. Als Halogenide werden bevorzugt die Chloride und Bromide eingesetzt. Geeignete Herstellungsverfahren werden z.B. in J. March, Advanced Organic Chemistry, 2. Auflage, S. 357 f (1977) genannt.

Die Veresterung der Polyoxyalkylenether ($R^{32}$ = -C(O)-$R^{34}$) erfolgt durch Umsetzung mit gängigen Veresterungsmitteln, wie Carbonsäuren, Carbonsäurehalogeniden, Carbonsäureanhydriden oder Carbonsäureestern mit $C_1$-$C_4$-Alkoholen. Bevorzugt werden die Halogenide und Anhydride von $C_1$-$C_{40}$-Alkyl-, $C_5$-$C_{10}$-Cycloalkyl- oder $C_6$-$C_{18}$-Arylcarbonsäuren verwendet. Die Veresterung wird im allgemeinen bei Temperaturen von 0 bis 200°C, vorzugsweise 10 bis 100°C durchgeführt.

Bei den Monomeren der Formel 20 gibt der Index m den Alkoxylierungsgrad, d.h. die Anzahl der Mole an α-Olefin an, die pro Mol der Formel 20 oder 21 angelagert werden.

Als zur Herstellung der Terpolymere geeignete primäre Amine seien beispielsweise die folgenden genannt:

n-Hexylamin, n-Octylamin, n-Tetradecylamin, n-Hexadecylamin, n-Stearylamin oder auch N,N-Dimethylaminopropylendiamin, Cyclohexylamin, Dehydroabietylamin sowie deren Mischungen.

Als zur Herstellung der Terpolymere geeignete sekundäre Amine seien beispielsweise genannt: Didecylamin, Ditetradecylamin, Distearylamin, Dicocosfettamin, Ditalgfettamin und deren Mischungen.

Die Terpolymeren besitzen K-Werte (gemessen nach Ubbelohde in 5 gew.-%iger Lösung in Toluol bei 25°C) von 8 bis 100, bevorzugt 8 bis 50, entsprechend mittleren Molekulargewichten ($\overline{M}_w$) zwischen ca. 500 und 1.000.000. Geeignete Beispiele sind in EP 606 055 aufgeführt.

B9) Umsetzungsprodukte von Alkanolaminen und/oder Polyetheraminen mit Polymeren enthaltend Dicarbonsäureanhydridgruppen, dadurch gekennzeichnet, daß sie 20 - 80, bevorzugt 40 - 60 Mol-% an bivalenten Struktureinheiten der Formeln 25 und 27 und gegebenenfalls 26

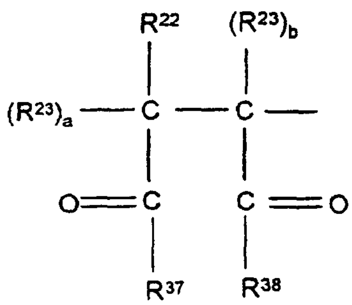

(25)

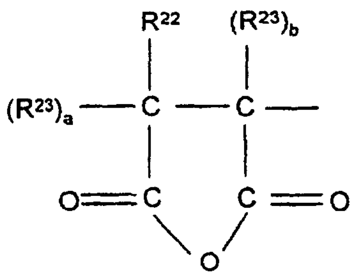

(26)

wobei

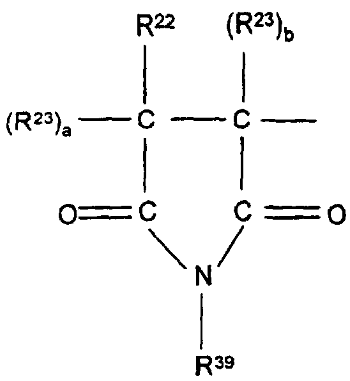

(27)

| | |
|---|---|
| $R^{22}$ und $R^{23}$ | unabhängig voneinander Wasserstoff oder Methyl, |
| a, b | gleich Null oder 1 und a + b gleich 1, |
| $R^{37}$ | = -OH, -O-[$C_1$-$C_{30}$-Alkyl], -$NR^6R^7$, $-O^{\ominus}N^{\oplus}R^6R^7H_2$ |
| $R^{38}$ | = $R^{37}$ oder $NR^6R^{39}$ |
| $R^{39}$ | = |

$$-(A-O)_x-E \quad (28)$$

mit

A = Ethylen- oder Propylengruppe
x = 1 bis 50
E = H, $C_1$-$C_{30}$-Alkyl, $C_5$-$C_{12}$-Cycloalkyl oder $C_6$-$C_{30}$-Aryl

bedeuten, und
80 - 20 Mol-%, bevorzugt 60 - 40 Mol-% an bivalenten Struktureinheiten der Formel 15 enthalten.

Im einzelnen leiten sich die Struktureinheiten der Formeln 25, 26 und 27 von α,β-ungesättigten Dicarbonsäureanhydriden der Formeln 17 und/oder 18 ab.

Die Struktureinheiten der Formel 15 leiten sich von den $\alpha,\beta$-ungesättigten Olefinen der Formel 19 ab. Die vorgenannte Alkyl-, Cycloalkyl- und Arylreste haben die gleichen Bedeutungen wie unter B8).

Die Reste $R^{37}$ und $R^{38}$ in Formel 25 bzw. $R^{39}$ in Formel 27 leiten sich von Polyetheraminen oder Alkanolaminen der Formel $H_2N\text{-}(A\text{-}O)_x\text{-}E$, Aminen der Formel $NR^6R^7R^8$ sowie gegebenenfalls von Alkoholen mit 1 bis 30 Kohlenstoffatomen ab.

Zur Derivatisierung der Struktureinheiten der Formeln 17 und 18 wurden vorzugsweise Gemische aus mindestens 50 Gew.-% Alkylaminen der Formel $HNR^6R^7R^8$ und höchstens 50 Gew.-% Polyetheraminen und/oder Alkanolaminen der Formel $H_2N\text{-}(A\text{-}O)_x\text{-}E$ verwendet.

Die Herstellung der eingesetzten Polyetheramine ist beispielsweise durch reduktive Aminierung von Polyglykolen möglich. Des weiteren gelingt die Herstellung von Polyetheraminen mit einer primären Aminogruppe durch Addition von Polyglykolen an Acrylnitril und anschließende katalytische Hydrierung. Darüber hinaus sind Polyetheramine durch Umsetzung von Polyethern mit Phosgen bzw. Thionylchlorid und anschließende Aminierung zum Polyetheramin zugänglich. Die erfindungsgemäß eingesetzten Polyetheramine sind (z.B.) unter der Bezeichnung ®Jeffamine (Texaco) kommerziell erhältlich. Ihr Molekulargewicht beträgt bis zu 2000 g/mol und das Ethylenoxid-/Propylenoxid-Verhältnis beträgt von 1:10 bis 6:1.

Eine weitere Möglichkeit zur Derivatisierung der Struktureinheiten der Formeln 17 und 18 besteht darin, daß anstelle der Polyetheramine ein Alkanolamin eingesetzt und nachfolgend einer Oxalkylierung unterworfen wird.

Pro Mol Anhydrid werden 0,01 bis 2 Mol, bevorzugt 0,01 bis 1 Mol Alkanolamin eingesetzt. Die Reaktionstemperatur beträgt zwischen 50 und 100°C (Amidbildung). Im Falle von primären Aminen erfolgt die Umsetzung bei Temperaturen oberhalb 100°C (Imidbildung).

Die Oxalkylierung erfolgt üblicherweise bei Temperaturen zwischen 70 und 170°C unter Katalyse von Basen, wie NaOH oder $NaOCH_3$, durch Aufgasen von Alkylenoxiden, wie Ethylenoxid (EO) und/oder Propylenoxid (PO). Üblicherweise werden pro Mol Hydroxylgruppen 1 bis 500, bevorzugt 1 bis 100 Mol Alkylenoxid zugegeben.

Als geeignete Alkanolamine seien beispielsweise genannt: Monoethanolamin, Diethanolamin, N-Methylethanolamin, 3-Aminopropanol, Isopropanol, Diglykolamin, 2-Amino-2-methylpropanol und deren Mischungen.

Als primäre Amine seien beispielsweise die folgenden genannt:

n-Hexylamin, n-Octylamin, n-Tetradecylamin, n-Hexadecylamin, n-Stearylamin oder
auch N,N-Dimethylaminopropylendiamin, Cyclohexylamin, Dehydroabietylamin sowie deren Mischungen.

Als sekundäre Amine seien beispielsweise genannt:

Didecylamin, Ditetradecylamin, Distearylamin, Dicocosfettamin, Ditalgfettamin und deren Mischungen.

Als Alkohole seien beispielsweise genannt:

Methanol, Ethanol, Propanol, Isopropanol, n-, sek.-, tert.-Butanol, Octanol, Tetradecanol, Hexadecanol, Octadecanol, Talgfettalkohol, Behenylalkohol und deren Mischungen. Geeignete Beispiele sind in EP-A-688 796 aufgeführt.

B10) Co- und Terpolymere von N-$C_6$-$C_{24}$-Alkylmaleinimid mit $C_1$-$C_{30}$-Vinylestern, Vinylethern und/oder Olefinen mit 1 bis 30 C-Atomen, wie z.B. Styrol oder $\alpha$-Olefinen. Diese sind zum einen durch Umsetzung eines Anhydridgruppen enthaltenden Polymers mit Aminen der Formel $H_2NR^6$ oder durch Imidierung der Dicarbonsäure und anschließende Copolymerisation zugänglich. Bevorzugte Dicarbonsäure ist dabei Maleinsäure bzw. Maleinsäureanhydrid. Bevorzugt sind dabei Copolymere aus 10 bis 90 Gew.-% $C_6$-$C_{24}$-$\alpha$-Olefinen und 90 bis 10 Gew.-% N-$C_6$-$C_{22}$-Alkylmaleinsäureimid.

Die Copolymerisation der Comonomeren zu Copolymeren, die Komponenten der erfindungsgemäßen Additive sind, erfolgt nach bekannten Verfahren (vgl. hierzu z.B. Ullmanns Encyclopädie der Technischen Chemie, 4. Auflage, Bd. 19, Seiten 169 bis 178). Geeignet sind die Polymerisation in Lösung, in Suspension, in der Gasphase und die Hochdruckmassepolymerisation.

Vorzugsweise wendet man für die Herstellung der Komponente A die Hochdruckmassepolymerisation an, die bei Drücken von 50 bis 400 MPa, vorzugsweise 100 bis 300 MPa und Temperaturen von 50 bis 350°C, vorzugsweise 100 bis 300°C, durchgeführt wird. Die Reaktion der Comonomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)-peroxidicarbonat, Di-tert.-butylperoxid, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder

als Gemisch aus zwei oder mehr Substanzen in Mengen von 0,01 bis 20 Gew.-%, vorzugsweise 0,05 bis 10 Gew.-%, bezogen auf das Comonomerengemisch, eingesetzt.

Die gewünschte Schmelzviskosität der Copolymerisate wird bei gegebener Zusammensetzung des Comonomerengemisches durch Variation der Reaktionsparameter Druck und Temperatur und gegebenenfalls durch Zusatz von Moderatoren eingestellt. Als Moderatoren haben sich Wasserstoff, gesättigte oder ungesättigte Kohlenwasserstoffe, z.B. Propan, Aldehyde, z.B. Propionaldehyd, n-Butyraldehyd oder Isobutyraldehyd, Ketone, z.B. Aceton, Methylethylketon, Methylisobutylketon, Cyclohexanon oder Alkohole, z.B. Butanol, bewährt. In Abhängigkeit von der angestrebten Viskosität werden die Moderatoren in Mengen bis zu 20 Gew.-%, vorzugsweise 0,05 bis 10 Gew.-%, bezogen auf das Comonomerengemisch, angewandt.

Die Hochdruckmassepolymerisation wird in bekannten Hochdruckreaktoren, z.B. Autoklaven oder Rohrreaktoren diskontinuierlich oder kontinuierlich durchgeführt, besonders bewährt haben sich Rohrreaktoren. Lösungsmittel wie aliphatische Kohlenwasserstoffe oder Kohlenwasserstoffgemische, Benzol oder Toluol, können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Comonomeren, dem Initiator und, sofern eingesetzt, dem Moderator, einem Rohrreaktor über den Reaktoreingang sowie über einen oder mehrere Seitenäste zugeführt. Hierbei können die Comonomerenströme unterschiedlich zusammengesetzt sein (EP-B-0 271 738).

Zur erfindungsgemäßen Verbesserung der Schmierwirkung von Ölen sind ebenfalls Copolymere, enthaltend Struktureinheiten, die sich aus Ethylen und Vinylalkohol ableiten, geeignet. Copolymere dieser Art können hergestellt werden, indem man ein Copolymer, enthaltend Struktureinheiten, die sich von Ethylen und Vinylestern, wie z.B. Vinylacetat ableiten, teilweise oder vollständig hydrolysiert. Diese Copolymere werden in Mischung mit den Komponenten B) verwendet.

Weiterhin läßt sich die Schmierwirkung von Ölen in erfindungsgemäßer Weise dadurch verbessern, daß man ihnen als Komponente A Ethylencopolymere zusetzt, die oxalkylierte Säuregruppen enthalten. Dazu geeignete Ethylencopolymere sind beispielsweise solche mit Acrylsäure, Methacrylsäure, Itaconsäure, Fumarsäure, Maleinsäure oder Maleinsäureanhydrid. Zur Herstellung eines die Schmierwirkung von Ölen verbessernden Additivs werden diese säuregruppenhaltigen Copolymere an den Säuregruppen mit $C_1$- bis $C_{10}$-Alkylenoxiden oxalkyliert. Bevorzugte Alkylenoxide sind Ethylenoxid, Propylenoxid und Butylenoxid. Die Oxalkylierung erfolgt vorzugsweise mit einem Einsatz von 0,5 bis 10 mol, insbesondere 1 bis 5 mol und speziell 1 bis 2 mol Alkylenoxid pro mol Säuregruppe. Auch diese Copolymere werden in Mischung mit Komponente B) verwendet.

Die erfindungsgemäßen Additive werden Mineralölen oder Mineralöldestillaten in Form von Lösungen oder Dispersionen die 10 bis 90 Gew.-%, bevorzugt 20 bis 80 Gew.-%, der Additive enthalten, zugesetzt. Die Komponenten A) und B) können den zu additivierenden Ölen gemeinsam oder auch getrennt zugesetzt werden. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ®Shellsol AB, ®Solvesso 150, ®Solvesso 200, ®Exxsol-, ®ISOPAR- und Shellsol D-Typen sowie Alkohole, Ether und/oder Ester. Durch die Additive in ihren Schmier- und/oder Kaltfließeigenschaften verbesserte Mineralöle oder Mineralöldestillate enthalten 0,001 bis 2, vorzugsweise 0,005 bis 0,5 Gew.-% Additiv bezogen auf das Destillat.

Zur Herstellung von Additivpaketen für spezielle Problemlösungen können die erfindungsgemäßen Additive auch zusammen mit einem oder mehreren öllöslichen Co-Additiven eingesetzt werden, die bereits für sich allein die Kaltfließeigenschaften und/oder Schmierwirkung von Rohölen, Schmierölen oder Brennölen verbessern. Beispiele solcher Co-Additive sind Vinylester enthaltende Copolymerisate oder Terpolymerisate des Ethylens, Alkylphenol-Aldehydharze und Kammpolymere.

So haben sich Mischungen der Additive mit Copolymerisaten hervorragend bewährt, die 10 bis 40 Gew.-% Vinylacetat und 60 bis 90 Gew.-% Ethylen enthalten. Nach einer weiteren Ausgestaltung der Erfindung setzt man die erfindungsgemäßen Additive in Mischung mit Ethylen/Vinylacetat/Neononansäurevinylester-Terpolymerisaten oder Ethylen-Vinylacetat/ Neodecansäurevinylester-Terpolymerisaten zur Verbesserung der Fließfähigkeit von Mineralölen oder Mineralöldestillaten ein. Die Terpolymerisate der Neononansäurevinylester bzw. der Neodecansäurevinylester enthalten außer Ethylen 10 bis 35 Gew.-% Vinylacetat, und 1 bis 25 Gew.-% der jeweiligen Neoverbindung. Ebenfalls geeignet sind Terpolymere aus Ethylen, 10 bis 35 Gew.-% Vinylacetat und 1 bis 25 Gew.-% 4-Methylpenten - 1 oder Norbomen. Das Mischungsverhältnis der erfindungsgemäßen Additive mit den vorstehend beschriebenen Ethylen/Vinylacetat-Copolymerisaten bzw. den Terpolymerisaten aus Ethylen, Vinylacetat und den Vinylestern der Neononan- bzw. der Neodecansäure beträgt (in Gewichtsteilen) 20:1 bis 1:20, vorzugsweise 10:1 bis 1:10.

Zur Optimierung der Eigenschaften als Fließverbesserer und/oder Lubricity-Additiv können die erfindungsgemäßen Additive femer in Mischung mit Alkylphenol-Formaldehydharzen eingesetzt werden. In einer bevorzugten Ausführungsform der Erfindung handelt es sich bei diesen Alkylphenol-Formaldehydharzen um solche der Formel 29

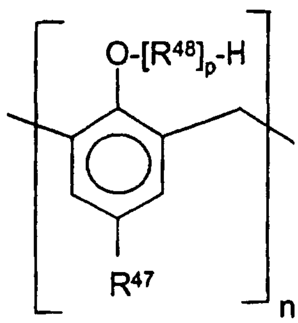

(29)

worin $R^{47}$ für lineares oder verzweigtes $C_4$-$C_{50}$-Alkyl oder -Alkenyl, $R^{48}$ für Ethoxy- und/oder Propoxy, n für eine Zahl von 5 bis 100 und p für eine Zahl von 0 bis 50 steht.

Schließlich werden in einer weiteren bewährten Variante der Erfindung die erfindungsgemäßen Additive zusammen mit Kammpolymeren verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers-Structure and Properties; N.A. Platé and V.P. Shibaev, J. Polym. Sci. Macromolecular Revs. 1974, 8, 117 ff).

Beispiele für geeignete Kammpolymere sind z.B. Fumarat/Vinylacetat-Copolymere (vgl. EP 0 153 176 A1), Copolymere aus einem $C_6$- bis $C_{24}$-$\alpha$-Olefin und einem N-$C_6$- bis $C_{22}$-Alkylmaleinsäureimid (vgl. EP 0 320 766), ferner veresterte Olefin/ Maleinsäureanhydrid-Copolymere, Polymere und Copolymere von $\alpha$-Olefinen und veresterte Copolymere von Styrol und Maleinsäureanhydrid.

Beispielsweise können Kammpolymere durch die Formel 30

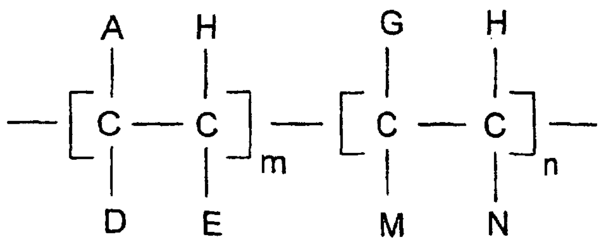

(30)

beschrieben werden. Darin bedeuten

A R', COOR', OCOR', R"-COOR' oder OR';
D H, $CH_3$, A oder R";
E H oder A;
G H, R", R"-COOR', einen Arylrest oder einen heterocyclischen Rest;
M H, COOR", OCOR", OR" oder COOH;
N H, R", COOR", OCOR, COOH oder einen Arylrest;
R' eine Kohlenwasserstoffkette mit 8-50 Kohlenstoffatomen;
R" eine Kohlenwasserstoffkette mit 1 bis 10 Kohlenstoffatomen;
m eine Zahl zwischen 0,4 und 1,0; und
n eine Zahl zwischen 0 und 0,6.

Das Mischungsverhältnis (in Gewichtsteilen) der erfindungsgemäßen Additive mit Paraffindispergatoren bzw. Kammpolymeren beträgt jeweils 1:10 bis 20:1, vorzugsweise 1:1 bis 10:1.

Zur Optimierung der Schmierwirkung können die erfindungsgemäßen Additive in Mischung mit weiteren Lubricity-Additiven eingesetzt werden. Als Lubricity-Additive haben sich vorzugsweise Fettalkohole, Fettsäuren und Dimerfettsäuren sowie deren Ester und Partialester mit Glykolen (gemäß DE-A-15 94 417), Polyolen wie Glycerin (gemäß

EP-A-0 680 506, EP-A-0 739 970) oder Hydroxyaminen (gemäß EP-A-0 802 961) bewährt.

Die erfindungsgemäßen Additive sind geeignet, die Schmiereigenschaften von tierischen, pflanzlichen oder mineralischen Ölen, alkoholischen Treibstoffen wie Methanol und Ethanol, sowie Mischungen aus alkoholischen Treibstoffen und mineralischen Ölen zu verbessern. Sie sind für die Verwendung in Mitteldestillaten besonders gut geeignet. Als Mitteldestillate bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Vorzugsweise werden die erfindungsgemäßen Additive in solchen Mitteldestillaten verwendet, die 0,5 Gew.-% Schwefel und weniger, insbesondere weniger als 200 ppm Schwefel und in speziellen Fällen weniger als 50 ppm Schwefel enthalten.

Es handelt sich dabei im allgemeinen um solche Mitteldestillate, die einer hydrierenden Raffination unterworfen wurden, und die daher nur geringe Anteile an polyaromatischen und polaren Verbindungen enthalten, die ihnen eine natürliche Schmierwirkung verleihen. Die erfindungsgemäßen Additive werden weiterhin vorzugsweise in solchen Mitteldestillaten verwendet, die 95 %-Destillationspunkte unter 370°C, insbesondere 350°C und in Spezialfällen unter 330°C aufweisen. Gleichzeitig verhindern bzw. verzögern sie während der Lagerung des Öls in der Kälte die Sedimentation ausgefallener Paraffinkristalle und damit die Bildung einer paraffinreichen Schicht am Boden von Lagerbehältern. Die Wirksamkeit der Mischungen ist dabei besser als aus den Einzelkomponenten zu erwarten wäre.

Die Additive können allein oder auch zusammen mit anderen Additiven verwendet werden, z.B. mit anderen Stockpunkterniedrigern oder Entwachsungshilfsmitteln, mit Korrosionsinhibitoren, Antioxidantien, den Leitfähigkeitsverbesseren, Schlamminhibitoren, Dehazern und Zusätzen zur Erniedrigung des Cloud-Points.

Die Wirksamkeit der erfindungsgemäßen Additive als Lubricity-Enhancer und Paraffindispergator wird durch die nachfolgenden Beispiele näher erläutert.

Beispiele

Charakterisierung der eingesetzten Additive

Die Bestimmung der hydroxyfunktionellen Comonomere erfolgt durch Bestimmung der OH-Zahl durch Umsetzung des Polymers mit überschüssigem Acetanhydrid und anschließender Titration der gebildeten Essigsäure mit KOH.

Die Bestimmung der Viskosität erfolgt gemäß ISO 3219 (B) mit einem Rotationsviskosimeter (Haake RV 20) mit Platte-Kegel-Meßsystem bei 140°C.

Alle Additive werden zur Verbesserung der Handhabbarkeit als 50 %ige Lösungen in Solvent Naphtha bzw. Kerosin eingesetzt.

Tabelle 1:

| Charakterisierung der eingesetzten Additive A | | | | |
|---|---|---|---|---|
| Beispiel Nr. | Vinylester | OH-Monomer | $V_{140}$ [mPas] | OH-Zahl |
| A1 | 22 % Vinylacetat | 10 % HEMA | 97 | 43 |
| A2 | 22 % Vinylacetat | 6 % HEMA | 77 | 38 |
| A3 | 32 % Versaticsäurevinylester | 8 % HEMA | 171 | 38 |
| A4 | 28 % Vinylacetat | 5 % DMVC | 121 | 24 |
| HEMA = Hydroxyethylmethacrylat<br>VA = Vinylacetat<br>DMVC = Dimethylvinylcarbinol | | | | |

Tabelle 2:

| Charakterisierung der eingesetzten Additive B | |
|---|---|
| Bsp. Nr. | Charakterisierung |
| B1 | Umsetzungsprodukt eines Dodecenyl-Spirobislactons mit einer Mischung aus primärem und sekundärem Talgfettamin |
| B2 | Umsetzungsprodukt eines Terpolymers aus $C_{14}$-$C_{16}$-$\alpha$-Olefin, Maleinsäureanhydrid und Allylpolyglykol mit 2 Equivalenten Ditalgfettamin |

Tabelle 2: (fortgesetzt)

| Charakterisierung der eingesetzten Additive B | |
|---|---|
| Bsp. Nr. | Charakterisierung |
| B3 | Copolymer aus Stearylmaleinimid und $C_{18}$-$\alpha$-Olefin |
| B4 | Nonylphenol-Formaldehydharz |
| B5 | Mischung aus B2 und B4 im Verhältnis 2:1 |

Tabelle 3:

| Charakterisierung der eingesetzten Fließverbesserer | | |
|---|---|---|
| Bsp. Nr. | Comonomer(e) | $V_{140}$ [mPas] |
| F1 | 32 % Vinylacetat | 140 |
| F2 | 31 % Vinylacetat + 8 % Neodecansäurevinylester | 125 |
| F3 | 29 % Vinylacetat + 6 % 4-Methylpenten | 220 |

Tabelle 4:

| Charakterisierung der Testöle | | | |
|---|---|---|---|
| Die Bestimmung der Siedekenndaten erfolgt gemäß ASTM D-86, die Bestimmung des CFPP-Werts gemäß EN 116 und die Bestimmung des Cloud Points gemäß ISO 3015. | | | |
| | Testöl 1 | Testöl 2 | Testöl 3 |
| Siedebeginn [°C] | 198 | 182 | 172,7 |
| 20 % [°C] | 246 | 202 | 215,9 |
| 30%[°C] | 260 | 208 | 231,5 |
| 90 % [°C] | 339 | 286 | 331,7 |
| 95%[°C] | 355 | 302 | 350,0 |
| Cloud Point [°C] | -5,2 | -29 | -6,6 |
| CFPP [°C] | -7 | -32 | -9 |
| S-Gehalt [ppm] | 26 | 3 | 388 |
| Dichte [g/cm$^3$] | 0,832 | 0,819 . | 0,836 |
| Wear Scar [µm] | 564 | 609 | 603 |

Schmierwirkung in Mitteldestillaten

Die Schmierwirkung der Additive wurde mittels eines HFRR-Geräts der Firma PCS Instruments an additivierten Ölen bei 60°C durchgeführt. Der High Frequency Reciprocating Rig Test (HFRR) ist beschrieben in D. Wei, H. Spikes, Wear, Vol. 111, No. 2, p. 217, 1986. Die Ergebnisse sind als Reibungskoeffizient (Friction) und Wear Scar angegeben. Ein niedriger Reibungskoeffizient und ein niedriger Wear Scar zeigen eine gute Schmierwirkung.

Tabelle 5:

| Wear Scar in Testöl 2 | | | | | |
|---|---|---|---|---|---|
| Nr. | Dosierrate A | Dosierrate B | Wear Scar | Film | Friction |
| 1 | 200 ppm A1 | - | 559 | 46 % | 0,28 |
| 2 | 300 ppm A1 | - | 435 | 75 % | 0,20 |

Tabelle 5: (fortgesetzt)

| Wear Scar in Testöl 2 | | | | | |
|---|---|---|---|---|---|
| Nr. | Dosierrate A | Dosierrate B | Wear Scar | Film | Friction |
| 3 | 400 ppm A1 | - | 350 | 80 % | 0,17 |
| 4 | - | 500 ppm B1 | 560 | 26 % | 0,39 |
| 5 | 200 ppm A1 | 150 ppm B1 | 273 | 92 % | 0,12 |
| 6 | | 1000 ppm B2 | 460 | 48 % | 0,21 |
| 7 | 200 ppm A1 | 150 ppm B2 | 373 | 69 % | 0,18 |
| 8 | - | 300 ppm B4 | 609 | 8 % | 0,34 |
| 9 | - | 1000 ppm B5 | 378 | 68 % | 0,19 |
| 10 | - | 1000 ppm B3 | 380 | 69 % | 0,18 |
| 11 | 100 ppm A1 | 250 ppm B2 | 343 | 79 % | 0,19 |
| 12 | 300 ppm A1 | 50 ppm B5 | 290 | 86 % | 0,14 |
| 13 | 200 ppm A1 | 150 ppm B4 | 599 | 11 % | 0,32 |
| 14 | 150 ppm A1 | 150 ppm B5 | 380 | 65 % | 0,18 |
| 15 | 200 ppm A1 | 150 ppm B5 | 288 | 84 % | 0,14 |
| 16 | 200 ppm A1 | 150 ppm B4 | 340 | 80 % | 0,16 |
| 17 | 500 ppm A3 | - | 310 | 84 % | 0,16 |
| 18 | 200 ppm A3 | 150 ppm B3 | 242 | 94 % | 0,13 |
| 19 | 150 ppm A3 | 200 ppm B5 | 285 | 90 % | 0,15 |
| 20 | 300 ppm A4 | 50 ppm B1 | 295 | 88 % | 0,15 |

Tabelle 6

| Wear Scar in Testöl 1 | | | | | | |
|---|---|---|---|---|---|---|
| Nr. | Dosierrate A | Dosierrate B1 | Fließverbesserer | Wear Scar | Film | Friction |
| 20 | 200 ppm A1 | - | | 560 | 16 % | 0,34 |
| 21 | 300 ppm A1 | - | | 535 | 20 % | 0,28 |
| 22 | 400 ppm A1 | - | | 238 | 91 % | 0,12 |
| 23 | - | | 100 ppm F1 | 560 | 15 % | 0,35 |
| 24 | - | | 300 ppm F1 | 550 | 17 % | 0,35 |
| 25 | 200 ppm A1 | | 100 ppm F1 | 285 | 87 % | 0,14 |
| 26 | 300 ppm A1 | | 100 ppm F1 | 203 | 95 % | 0,13 |
| 27 | | 300 ppm B2 | - | 480 | 22 % | 0,27 |
| 28 | 200 ppm A1 | 150 ppm B2 | - | 381 | 57 % | 0,19 |
| 29 | 200 ppm A1 | 100 ppm B2 50 ppm B4 | - | 313 | 52 % | 0,20 |
| 30 | 300 ppm A1 | 100 ppm B2 50 ppm B4 | 100 ppm F1 | 205 | 94 % | 0,12 |
| 31 | 200 ppm A1 | 100 ppm B2 50 ppm B4 | 100 ppm F1 | 185 | 95 % | 0,12 |
| 32 | 200 ppm A3 | 150 ppm B2 | 100 ppm F3 | 347 | 49% | 0,18 |

Tabelle 7:

| Wear Scar in Testöl 3 | | | | | | |
|---|---|---|---|---|---|---|
| Nr. | Dosierrate A2 | Dosierrate B2 | Dosierrate F2 | Wear Scar | Film | Friction |
| 33 | | 200 ppm | 200 ppm | 391 | 74 | 0,177 |
| 34 | 400 ppm | - | - | 299 | 87 | 0,148 |
| 35 | 100 ppm | 150 ppm | 150 ppm | 283 | 88 | 0,143 |
| 36 | 200 ppm | 100 ppm | 100 ppm | 299 | 88 | 0,152 |

Paraffindispergierung in Mitteldestillaten

Für die folgenden Versuche wurde ein skandinavischer Winterdieselkraftstoff verwendet. Das Mitteldestillat wurde bei Raumtemperatur mit 100 ppm einer 50 %igen Dispersion eines handelsüblichen Fließverbesseres (Ethylen-Vinylacetat-Copolymer mit 32 Gew.-% Vinylacetat und einer bei 140°C gemessenen Schmelzviskosität von 115 mPas) sowie den in Tabelle 8 angegebenen Mengen der auf 60°C temperierten Additive versetzt, 15 Minuten unter gelegentlichem Schütteln auf 40°C erwärmt und anschließend auf Raumtemperatur abgekühlt. Von dem so additivierten Mitteldestillat wurde gemäß EN 116 der CFPP-Wert bestimmt.

Die additivierten Proben wurden in 200 ml-Meßzylindern in einem Kälteschrank mit - 2°C/Stunde auf -13°C abgekühlt und 16 Stunden bei dieser Temperatur gelagert. Anschließend wurden visuell Volumen und Aussehen sowohl des Sediments (Paraffinphase) wie auch der darüber stehenden Ölphase bestimmt und beurteilt. Eine geringe Sedimentmenge und eine trübe Ölphase zeigen eine gute Paraffindispergierung.

Zusätzlich wurden die unteren 20 Vol.-% isoliert und der Cloud Point bestimmt. Eine nur geringe Abweichung des Cloud Points der unteren ($CP_{KS}$) vom Blindwert des Öls zeigt eine gute Paraffindispergierung.

Tabelle 8

| Dispergierwirkung in Testöl 1 | | | | |
|---|---|---|---|---|
| Additiv | CFPP | $CP_{KS}$ | $\Delta CP$ | Aussehen |
| kein Additiv (Vgl.) | - 18 | + 4,3 | 9,5 | klar; 17 % Sediment |
| 150 ppm B2 (Vgl.) | - 14 | - 2,5 | 2,7 | trüb, kein Sediment |
| 150 ppm B4 (Vgl.) | - 17 | + 0,6 | 5,8 | trüb, kein Sediment |
| 150 ppm B5 (Vgl.) | - 19 | - 3,3 | 1,9 | trüb; kein Sediment |
| 300 ppm B5 (Vgl.) | - 14 | - 0,4 | 5,6 | trüb; 65 % Sediment |
| 150 ppm B5 200 ppm A1 | - 20 | - 4,6 | 0,6 | trüb; kein Sediment |
| 300 ppm B5<br>300 ppm A1 | - 20 | - 4,7 | 0,5 | trüb; kein Sediment |
| 300 ppm A1 (Vgl.) | - 18 | + 4,4 | 9,6 | leicht trüb, 20% Sediment |
| 150 ppm B2<br>150 ppm A1 | - 19 | - 4,4 | 0,8 | trüb, kein Sediment |
| 150 ppm B2<br>150 pm A4 | - 19 | - 4,6 | 0,6 | trüb, kein Sediment |

Liste der verwendeten Handelsbezeichnungen

Solvent Naphtha
® Shellsol AB    aromatische Lösemittelgemische mit Siedebereich 180 bis 210°C

| | |
|---|---|
| ®Solvesso 150<br>®Solvesso 200 | aromatisches Lösemittelgemisch mit Siedebereich 230 bis 287°C |
| ® Exxsol | Dearomatisierte Lösemittel in verschiedenen Siedebereichen, beispielsweise ® Exxsol D60: 187 bis 215°C |
| ® ISOPAR (Exxon) | isoparaffinische Lösemittelgemische in verschiedenen Siedebereichen, beispielsweise ®ISOPAR L: 190 bis 210°C |
| ® Shellsol D | hauptsächlich aliphatische Lösemittelgemische in verschiedenen Siedebereichen |

**Patentansprüche**

1. Additiv für Brennstofföle, enthaltend

   A) 10 bis 90 Gew.-% mindestens eines Copolymers aus Ethylen und mindestens einem weiteren olefinisch ungesättigten Monomer, das eine oder mehrere Hydroxylgruppen enthält, und
   B) 90 bis 10 Gew.-% mindestens einer polaren stickstoffhaltigen Verbindung.

2. Additiv nach Anspruch 1, **dadurch gekennzeichnet, daß** das olefinisch ungesättigte Comonomer aus Komponente A) der Formel 1 entspricht

$$CH_2 = CH - OCOR^1 \quad (1)$$

   worin $R^1$ $C_1$-$C_{30}$-Hydroxyalkyl, vorzugsweise $C_1$-$C_{12}$-Hydroxyalkyl, speziell $C_2$-$C_6$-Hydroxyalkyl sowie die entsprechenden Hydroxyoxalkylreste bedeutet, und insbesondere 2-Hydroxyethylvinylester, 2-Hydroxypropylvinylester, 3-Hydroxypropylvinylester oder 4-Hydroxybutylvinylester darstellt.

3. Additiv nach Anspruch 1 und/oder 2, **dadurch gekennzeichnet, daß** das olefinisch ungesättigte Comonomer aus Komponente A) der Formel 2 entspricht

$$CH_2 = CR^2 - COOR^3 \quad (2)$$

   worin $R^2$ Wasserstoff oder Methyl und $R^3$ $C_1$-$C_{30}$-Hydroxyalkyl, vorzugsweise $C_1$-$C_{12}$-Hydroxyalkyl, speziell $C_2$-$C_6$-Hydroxyalkyl sowie die entsprechenden Hydroxyoxalkylreste bedeutet und insbesondere Hydroxyethylacrylat, Hydroxyethylmethacrylat, 2-Hydroxypropylacrylat, 3-Hydroxypropylacrylat, 3-Hydroxypropylmethacrylat, Hydroxyisopropylacrylat, 4-Hydroxybutylacrylat und Glycerinmonoacrylat darstellt.

4. Additiv nach einem oder mehreren der Ansprüche 1 bis 3, **dadurch gekennzeichnet, daß** das olefinisch ungesättigte Comonomer aus Komponente A) der Formel 3 entspricht

$$CH_2 = CH - OR^4 \quad (3)$$

   worin $R^4$ $C_1$-$C_{30}$-Hydroxyalkyl, vorzugsweise $C_1$-$C_{12}$-Hydroxyalkyl, speziell $C_2$-$C_6$-Hydroxyalkyl sowie die entsprechenden Hydroxyoxalkylreste bedeutet und insbesondere 2-Hydroxyethylvinylether, Hydroxypropylvinylether, Hexandiolmonovinylether, 4-Hydroxybutylvinylether, Diethylenglykolmonovinylether oder Cyclohexandimethanolmonovinylether darstellt.

5. Additiv nach einem oder mehreren der Ansprüche 1 bis 4, **dadurch gekennzeichnet, daß** das olefinisch ungesättigte Comonomer aus Komponente A) ein Hydroxyalken mit 3 bis 30, insbesondere 4 bis 16, besonders bevorzugt 5 bis 12 Kohlenstoffatomen ist, wobei speziell Dimethylvinylcarbinol (= 2-Methyl-3-buten-2-ol), Allyloxypropandiol, 2-Buten-1,4-diol, 1-Buten-3-ol, 3-Buten-1-ol, 2-Buten-1-ol, 1-Penten-3-ol, 1-Penten-4-ol, 2-Methyl-3-buten-1-ol, 1-Hexen-3-ol, 5-Hexen-1-ol und 7-Octen-1,2-diol Verwendung finden.

6. Additiv nach einem oder mehreren der Ansprüche 1 bis 5, **dadurch gekennzeichnet, daß** der molare Anteil des hydroxyfunktionalisierten Comonomeren in der Komponente A) 0,5 bis 13 %, insbesondere 3 bis 10 % beträgt.

7. Additiv nach einem oder mehreren der Ansprüche 1 bis 6, **dadurch gekennzeichnet, daß** die OH-Zahl der Copolymeren der Komponente A) zwischen 1 und 800 mg KOH/g liegt.

8. Additiv nach einem oder mehreren der Ansprüche 1 bis 7, **dadurch gekennzeichnet, daß** die Schmelzviskositäten der Copolymere der Komponente A) unterhalb 10.000 mPas und vorzugsweise 10 bis 1.000 mPas betragen.

9. Additiv nach einem oder mehreren der Ansprüche 1 bis 8, **dadurch gekennzeichnet, daß** die Copolymere der Komponente A) neben Ethylen und hydroxyfunktionalisierten Comonomeren ein, zwei oder drei weitere Comonomere umfassen, die aus der Gruppe bestehend aus Vinylestern, Acrylsäure, Acrylester, Vinylether und/oder Alkenen ausgewählt sind.

10. Additiv nach einem oder mehreren der Ansprüche 1 bis 9, **dadurch gekennzeichnet, daß** die polare Stickstoffverbindung eine Verbindung ist, die durch die Reaktion einer Acylgruppe (>C = O) mit einer Stickstoffverbindung der Formel $NR^6R^7R^8$ entsteht, worin $R^6$, $R^7$ und $R^8$ gleich oder verschieden sein können, und wenigstens eine dieser Gruppen für $C_8$-$C_{36}$-Alkyl, $C_6$-$C_{36}$-Cycloalkyl, $C_8$-$C_{36}$-Alkenyl, insbesondere $C_{12}$-$C_{24}$-Alkyl, $C_{12}$-$C_{24}$-Alkenyl oder Cyclohexyl steht, und die übrigen Gruppen entweder Wasserstoff, $C_1$-$C_{36}$-Alkyl, $C_2$-$C_{36}$-Alkenyl, Cyclohexyl oder eine Gruppe der Formeln $-(A-O)_x-E$ oder $-(CH_2)_n-NYZ$ bedeuten, worin A für eine Ethylen- oder Propylengruppe steht, x eine Zahl von 1 bis 50, E = H, $C_1$-$C_{30}$-Alkyl, $C_5$-$C_{12}$-Cycloalkyl oder $C_6$-$C_{30}$-Aryl, und n 2, 3 oder 4 bedeuten, und Y und Z unabhängig voneinander H, $C_1$-$C_{30}$-Alkyl oder $-(A-O)_x-E$ bedeuten.

11. Mischung eines Additivs nach einem oder mehreren der Ansprüche 1 bis 10 mit einem Alkylphenol-Formaldehydharz der Formel

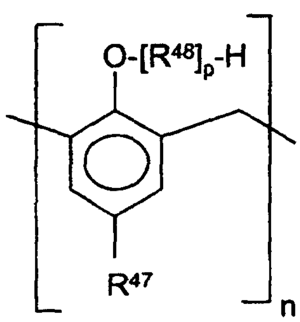

(29)

worin $R^{47}$ für lineares oder verzweigtes $C_4$-$C_{50}$-Alkyl oder -Alkenyl, $R^{48}$ für Ethoxy und/oder Propoxy, n für eine Zahl von 5 bis 100 und p für eine Zahl von 0 bis 50 steht, wobei das Mischungsverhältnis Additiv:Harz zwischen 1:10 und 20:1 liegt.

12. Mischung eines Additivs nach einem oder mehreren der Ansprüche 1 bis 10 mit Copolymerisaten aus 10 bis 40 Gew.-% Vinylacetat und 60 bis 90 Gew.-% Ethylen oder mit Terpolymerisaten aus 10 bis 35 Gew.-% Vinylacetat, 1 bis 25 Gew.-% Neononansäurevinylester oder Neodecansäurevinylester und Ethylen ad 100 Gew.-%, im Verhältnis Additiv:Polymer = 20:1 bis 1:20.

13. Brennstofföle, enthaltend Mitteldestillate mit maximal 0,5 Gew.-% Schwefel und ein Additiv nach einem oder mehreren der Ansprüche 1 bis 10.

## Claims

1. An additive for fuel oils, comprising

A) from 10 to 90% by weight of at least one copolymer of ethylene and at least one further olefinically unsaturated monomer containing one or more hydroxyl groups, and
B) from 90 to 10% by weight of at least one polar nitrogen-containing compound.

2. An additive as claimed in claim 1, wherein the olefinically unsaturated comonomer of component A) conforms to the formula 1

$$CH_2 = CH - OCOR^1 \quad (1)$$

in which $R^1$ is $C_1$-$C_{30}$-hydroxyalkyl, preferably $C_1$-$C_{12}$-hydroxyalkyl, especially $C_2$-$C_6$-hydroxyalkyl, and the corresponding hydroxyoxalkyl radicals, and is in particular 2-hydroxyethyl vinyl ester, 2-hydroxypropyl-vinyl ester, 3-hydroxypropyl vinyl ester or 4-hydroxybutyl vinyl ester.

3. An additive as claimed in claim 1 and/or 2, wherein the olefinically unsaturated comonomer from component A) conforms to the formula 2.

$$CH_2 = CR^2 - COOR^3 \quad (2)$$

in which $R^2$ is hydrogen or methyl, and $R^3$ is $C_1$-$C_{30}$-hydroxyalkyl, preferably $C_1$-$C_{12}$-hydroxyalkyl, especially $C_2$-$C_6$-hydroxyalkyl, and the corresponding hydroxyoxalkyl radicals, and is in particular hydroxyethyl acrylate, hydroxyethyl methacrylate, 2-hydroxypropyl acrylate, 3-hydroxypropyl acrylate, 3-hydroxypropyl methacrylate, hydroxyisopropyl acrylate, 4-hydroxybutyl acrylate and glycerol monoacrylate.

4. An additive as claimed in one or more of claims 1 to 3, wherein the olefinically unsaturated comonomer from component A) conforms to the formula 3

$$CH_2 = CH - OR^4 \quad (3)$$

in which $R^4$ is $C_1$-$C_{30}$-hydroxyalkyl, preferably $C_1$-$C_{12}$-hydroxyalkyl, especially $C_2$-$C_6$-hydroxyalkyl, and the corresponding hydroxyoxalkyl radicals, and is in particular 2-hydroxyethyl vinyl ether, hydroxypropyl vinyl ether, hexanediol monovinyl ether, 4-hydroxybutyl vinyl ether, diethylene glycol monovinyl ether or cyclohexanedimethanol monovinyl ether.

5. An additive as claimed in one or more of claims 1 to 4, wherein the olefinically unsaturated comonomer from component A) is a hydroxyalkene having 3 to 30, in particular 4 to 16, particularly preferably 5 to 12, carbon atoms, specifically dimethylvinylcarbinol (= 2-methyl-3-buten-2-ol), allyloxypropanediol, 2-butene-1,4-diol, 1-buien-3-ol, 3-buten-1-ol, 2-buten-1-ol, 1-penten-3-ol, 1-penten-4-ol, 2-methyl-3-buten-1-ol, 1-hexen-3-ol, 5-hexen-1-ol and 7-octene-1,2-diol.

6. An additive as claimed in one or more of claims 1 to 5, wherein the molar proportion of the hydroxyl-functionalized comonomers in component A) is from 0.5 to 13%, in particular from 3 to 10%.

7. An additive as claimed in one or more of claims 1 to 6, wherein the OH number of the copolymers of component A) is between 1 and 800 mg of KOH/g.

8. An additive as claimed in one or more of claims 1 to 7, wherein the melt viscosities of the copolymers of component A) are below 10,000 mPas and preferably from 10 to 1000 mPas.

9. An additive as claimed in one or more of claims 1 to 8, wherein the copolymers of component A) include, besides ethylene and hydroxyl-functionalized comonomers, one, two or three further comonomers from the group consisting of vinyl esters, acrylic acid, acrylates, vinyl ethers and/or alkenes.

10. An additive as claimed in one or more of claims 1 to 9, wherein the polar nitrogen compound is a compound formed by the reaction of an acyl group(>c = o) with a nitrogen compound of the formula $NR^6R^7R^8$, in which $R^6$, $R^7$ and $R^8$ may be identical or different and at least one of these groups is $C_8$-$C_{36}$-alkyl, $C_6$-$C_{36}$-cycloalkyl, $C_8$-$C_{36}$-alkenyl, in particular $C_{12}$-$C_{24}$-alkyl, $C_{12}$-$C_{24}$-alkenyl or cyclohexyl, and the other groups are either hydrogen, $C_1$-$C_{36}$-alkyl, $C_2$-$C_{36}$-alkenyl, cyclohexyl or a group of the formula $-(A-O)_x-E$ or $-(CH_2)_n-NYZ$, in which A is an ethylene or propylene group, x is a number from 1 to 50, E = H, $C_1$-$C_{30}$-alkyl, $C_5$-$C_{12}$-cycloalkyl or $C_6$-$C_{30}$-aryl, and n is 2, 3 or 4,

and Y and Z, independently of one another, are H, $C_1$-$C_{30}$-alkyl or -(A-O)$_x$-E.

**11.** A mixture of an additive as claimed in one or more of claims 1 to 10 with an alkylphenol-formaldehyde resin of the formula

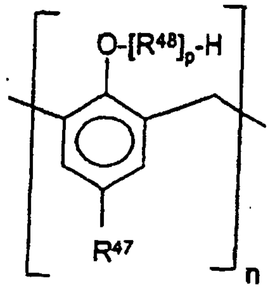

(29)

in which $R^{47}$ is linear or branched $C_4$-$C_{50}$-alkyl or -alkenyl, $R^{48}$ is ethoxy and/or propoxy, n is a number from 5 to 100, and p is a number from 0 to 50, the mixing ratio of additive : resin being between 1:10 and 20:1.

**12.** A mixture of an additive as claimed in one or more of claims 1 to 10 with copolymers comprising from 10 to 40% by weight of vinyl acetate and from 60 to 90% by weight of ethylene, or with terpolymers comprising from 10 to 35% by weight of vinyl acetate, from 1 to 25% by weight of vinyl neononanoate or vinyl neodecanoate and ethylene and 100% by weight in a ratio of additive : polymer of from 20:1 to 1:20.

**13.** A fuel oil comprising a middle distillate containing a maximum of 0.5% by weight of sulfur and an additive as claimed in one or more of claims 1 to 10.

## Revendications

**1.** Additif pour huiles combustibles, contenant

A) 10 à 90 % en poids d'au moins un copolymère d'éthylène et d'au moins un autre monomère oléfiniquement insaturé, qui contient un ou plusieurs groupes hydroxyle, et
B) 90 à 10 % en poids d'au moins un composé azoté polaire.

**2.** Additif selon la revendication 1, **caractérisé en ce que** le comonomère oléfiniquement insaturé du composant A) correspond à la formule 1

$$CH_2=CH\text{-}OCOR^1 \qquad (1)$$

dans laquelle $R^1$ représente un groupe hydroxyalkyle en $C_1$ à $C_{30}$, de préférence hydroxyalkyle en $C_1$ à $C_{12}$, en particulier hydroxyalkyle en $C_2$ à $C_6$ ainsi que les groupes hydroxyoxalkyle correspondants, et en particulier le 2-hydroxyéthylvinylester, 2-hydroxypropylvinylester, 3-hydroxypropylvinylester ou 4-hydroxybutylvinylester.

**3.** Additif selon la revendication 1 et/ou 2, **caractérisé en ce que** le comonomère oléfiniquement insaturé du composant A) correspond à la formule 2

$$CH_2=CR^2\text{-}COOR^3 \qquad (2)$$

dans laquelle $R^2$ représente un atome d'hydrogène ou un groupe méthyle et $R^3$ représente un groupe hydroxyalkyle en $C_1$ à $C_{30}$, de préférence hydroxyalkyle en $C_1$ à $C_{12}$, en particulier hydroxyalkyle en $C_2$ à $C_6$ ainsi que les groupes hydroxyoxalkyle correspondants, et en particulier l'acrylate d'hydroxyéthyle, le méthacrylate d'hydroxyéthyle, l'acrylate de 2-hydroxypropyle, l'acrylate de 3-hydroxypropyle, le méthacrylate de 3-hydroxypropyle, l'acrylate d'hydroxyisopropyle, l'acrylate de 4-hydroxybutyle et le monoacrylate de glycérine.

**4.** Additif selon une ou plusieurs des revendications 1 à 3, **caractérisé en ce que** le comonomère oléfiniquement insaturé du composant A) correspond à la formule 3

$$CH_2{=}CH\text{-}OR^4 \qquad (3)$$

dans laquelle $R^4$ représente un groupe hydroxyalkyle en $C_1$ à $C_{30}$, de préférence hydroxyalkyle en $C_1$ à $C_{12}$, en particulier hydroxyalkyle en $C_2$ à $C_6$ ainsi que les groupes hydroxyoxalkyle correspondants, et en particulier le 2-hydroxyéthylvinyléther, l'hydroxypropylvinyléther, l'hexanediolmonovinyléther, le 4-hydroxybutylvinyléther le diéthylèneglycolmonovinyléther ou le cyclohexanediméthanolmonovinyléther.

**5.** Additif selon une ou plusieurs des revendications 1 à 4, **caractérisé en ce que** le comonomère oléfiniquement insaturé du composant A) est un hydroxyalcène ayant de 3 à 30, en particulier de 4 à 16, de manière particulièrement préférée de 5 à 12 atomes de carbone, dans lequel on utilise spécialement le groupe diméthylvinylcarbinol (= 2-méthyl-3-butène-2-ol), allyloxypropanediol, 2-butène-1,4-diol, 1-butène-3-ol, 3-butène-1-ol, 2-butène-1-ol, 1-pentène-3-ol, 1-pentène-4-ol, 2-méthyl-3-butène-1-ol, 1-hexène-3-ol, 5-hexène-1-ol et 7-octène-1,2-diol.

**6.** Additif selon une ou plusieurs des revendications 1 à 5, **caractérisé en ce que** la proportion molaire du comonomère fonctionnalisé hydroxy dans le composant A) est de 0,5 à 13 %, en particulier de 3 à 10 %.

**7.** Additif selon une ou plusieurs des revendications 1 à 6, **caractérisé en ce que** l'indice OH des copolymères du composant A) se situe entre 1 et 800 mg KOH/g.

**8.** Additif selon une ou plusieurs des revendications 1 à 7, **caractérisé en ce que** les viscosités à l' état fondu des copolymères du composant A) sont inférieures à 10 000 mPa·s et de préférence sont comprises entre 10 et 1 000 mPa·s.

**9.** Additif selon une ou plusieurs des revendications 1 à 8, **caractérisé en ce que** les copolymères du composant A) comprennent en plus de l'éthylène et des comonomères fonctionnalisés hydroxy un, deux ou trois autres comonomères, qui sont choisis dans le groupe constitué des esters de vinyle, de l'acide acrylique, des esters acryliques, des vinyléthers et/ou des alcènes.

**10.** Additif selon une ou plusieurs des revendications 1 à 9, **caractérisé en ce que** le composé azoté polaire est un composé qui se forme par la réaction d'un groupe acyle (>C=O) avec un composé de l'azote de formule $NR^6R^7R^8$, dans laquelle $R^6$, $R^7$ et $R^8$ peuvent être identiques ou différents, et au moins un de ces groupes représente un alkyle en $C_8$ à $C_{36}$, cycloalkyle en $C_6$ à $C_{36}$, alcényle en $C_8$ à $C_{36}$, en particulier alkyle en $C_{12}$ à $C_{24}$, alcényle en $C_{12}$ à $C_{24}$ ou cyclohexyle et les autres groupes représentent soit un atome d'hydrogène, un groupe alkyle en $C_1$ à $C_{36}$, alcényle en $C_2$ à $C_{36}$, cyclohexyle ou un groupe des formules $-(A\text{-}O)_x\text{-}E$ ou $-(CH_2)_n\text{-}NYZ$, dans lesquelles A représente un groupe éthylène ou propylène, x un nombre de 1 à 50, E = H, un groupe alkyle en $C_1$ à $C_{30}$, cycloalkyle en $C_5$ à $C_{12}$ ou aryle en $C_6$ à $C_{30}$ et n représente 2, 3 ou 4, et Y et Z représentent indépendamment l'un de l'autre H, un groupe alkyle en $C_1$ à $C_{30}$ ou $-(A\text{-}O)_x\text{-}E$.

**11.** Mélange d'un additif selon une ou plusieurs des, revendications 1 à 10 avec une résine alkylphénolformaldéhyde de formule

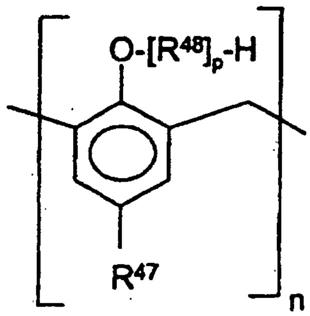

(29)

dans laquelle $R^{47}$ représente un groupe alkyle ou alcényle en $C_4$ à $C_{50}$ linéaire ou ramifié, $R^{48}$ représente un groupe éthoxy et/ou propoxy, n représente un nombre de 5 à 100 et p un nombre de 0 à 50, le rapport de mélange additif : résine se situant entre 1 : 10 et 20 : 1.

**12.** Mélange d'un additif selon une ou plusieurs des revendications 1 à 10 avec des produits de copolymérisation de 10 à 40 % en poids d'acétate de vinyle et de 60 à 90 % en poids d'éthylène ou avec des terpolymères de 10 à 35 % en poids d'acétate de vinyle, 1 à 25 % en poids d'ester vinylique d'acide néononanoïque ou d'ester vinylique d'acide néodécanoïque et d'éthylène jusqu'à 100 % en poids, dans le rapport additif: polymère = 20 : 1 à 1 : 20.

**13.** Huiles combustibles, contenant des distillats moyens avec au maximum 0,5 % en poids de soufre et un additif selon une ou plusieurs des revendications 1 à 10.